**Europäisches Patentamt**

**European Patent Office**

**Office européen des brevets**

(19)

(11) Veröffentlichungsnummer : **0 156 207**
**B1**

(12) # EUROPÄISCHE PATENTSCHRIFT

(45) Veröffentlichungstag der Patentschrift :
28.06.89

(51) Int. Cl.⁴ : **B 65 G 21/00**, B 65 G 21/08

(21) Anmeldenummer : 85102495.0

(22) Anmeldetag : 06.03.85

(54) Vorrichtung zur Sicherung von fördermittelein- oder -auslauf-seitigen Öffnungen bei Bandförderern.

Teilanmeldung 87110055 eingereicht am 13.07.87.

(30) Priorität : 13.03.84 DE 3409161

(43) Veröffentlichungstag der Anmeldung :
02.10.85 Patentblatt 85/40

(45) Bekanntmachung des Hinweises auf die Patenterteilung : 28.06.89 Patentblatt 89/26

(84) Benannte Vertragsstaaten :
AT BE CH DE FR GB IT LI LU NL SE

(56) Entgegenhaltungen :
EP—A— 0 074 649
DE—A— 2 635 981
FR—A— 2 061 511
GB—A—   363 964
DIN 15220

(73) Patentinhaber : Geppert, Helmut
Niederfeld 12
D-5162 Niederzier-Krauthausen (DE)

(72) Erfinder : Geppert, Helmut
Niederfeld 12
D-5162 Niederzier-Krauthausen (DE)

(74) Vertreter : Liermann, Manfred
Josef-Schregel-Strasse 19
D-5160 Düren (DE)

**Beschreibung**

Die Erfindung betrifft einen Bandförderer mit einer einen zugriffsgefährdeten Zwischenraum zumindest zwischen dem tragrahmennahen Umfangsbereich einer auf vorzugsweise in Längsrichtung gegenüber einem Tragrahmen verstellbaren Tragstücken aufgenommenen Walze oder Rolle für das Fördermittel und den dieser Walze bzw. Rolle zugeordneten Tragstücken überbrückenden Abdeckeinrichtung.

Mit der DE-A-2635981 ist ein Bandförderer mit zwei Längsholmen bekannt, die jeweils an ihren entgegengesetzten Enden eine Umlenkwalze für ein Förderband tragen, wobei zwischen den beiden Längsholmen ein sich in Längsrichtung erstreckender Abstand vorgesehen ist, in dem eine Reihe von Tragrollen 6 angeordnet und von den Längsholmen getragen sind. Diese Tragrollen 6 stützen das Förderband ab. Hierbei ist das Förderband breiter als die Tragrollen 6 und gleitet mit seinem die Tragrollen 6 überschreitenden Bereich auf entsprechenden Gleitblechen, die jeweils von den Längsholmen gebildet werden. Diese im wesentlichen sich parallel zu den Achsen der Umlenkwalzen erstreckenden Gleitbleche sind in Längsrichtung bis in die Nähe der Oberfläche der Umlenkwalzen geführt. Zwischen der Oberfläche der Umlenkwalze und dem jeweiligen Ende eines solchen Gleitbleches bleibt ebenso wie zwischen der jeweiligen Stirnseite einer Umlenkrolle und dem die Achse einer jeweiligen Umlenkrolle tragenden Teil des Längsholmes ein unveränderlicher Spalt offen, in den Gegenstände, Kleidungsstücke oder z. B. Finger einer menschlichen Hand unbeabsichtigt hineingezogen werden können. Diese Bereiche sind also gefährlich. Irgendeine Möglichkeit zur Beseitigung dieser Gefahr kann dieser Schrift nicht entnommen werden.

Nach der ebenfalls bekannten DIN 15 220 wird vorgeschlagen zur Bildung der notwendigen Abdeckeinrichtung zur Abdeckung eines zugriffsgefährdeten Zwischenraumes über die ganze Förderbreite sich erstreckende Füllstücke vorzusehen. Solche Füllstücke erfordern jedoch einen nicht unbeachtlichen Herstellungs- und Montageaufwand und erhöhen unerwünschterweise das Eigengewicht des gesamten Bandförderers. Sie erschweren außerdem beträchtlich eine für den stabilen Lauf des Förderbandes notwendige korrekte Ausrichtung der Walzen, wenn sie starr mit den die Walzen tragenden Tragstücken verbunden wären.

Es ist jedoch nach dieser DIN 15 220 auch vorgeschlagen, eine Ausführung in geschlossener Kastenbauweise vorzusehen und dort im Bereich der Spanntrommel einen Teil des Gleitbleches nachstellbar einzurichten (Seite 3 linke Spalte). Solche nachstellbaren Gleitbleche stellen jedoch keinen sicheren Schutz dar, weil sie einerseits in der Betriebspraxis nicht nachgestellt werden und weil sie andererseits im Bereich der Walzenstirnseite und der vertikalen Innenseite des Gleitbleches einen neuen Spalt eröffnen, der besonders leicht zugänglich und damit besonders gefährlich ist. Werden solche Gleitbleche an der Innenseite des Rahmens angebracht, wie dies der Darstellung in der genannten DIN 15 220 auf Seite 3 entnommen werden kann, dann besteht der entsprechende Spalt in seiner ganzen Gefahr zwischen der Stirnseite der Walze und dem gegenüberliegend angeordneten Bereich des Rahmens. Eine Spaltsicherung liegt somit nicht vor.

Es ist aber, wie auch bereits gesagt, eine bekannte Tatsache, daß solche Öffnungen bei Bandförderern beschriebener Art eine gefürchtete Gefahrenquelle dafür darstellen, daß Finger oder Teile von Kleidungsstücken während des Förderbetriebes in sie gelangen und zwischen dem Fördermittel und der betreffenden Walze bzw. Rolle eingezogen werden könnten, was erfahrungsgemäß zu schwerwiegenden Unfällen führen kann, von denen Quetschungen der Gliedmaßen noch als von geringerer Schwere anzusprechen sind. Außerdem bieten solche Öffnungen, die bei in einer Ebene arbeitenden Förderern sowohl im Bereich der Fördergutaufgabestation als auch der Fördergutabgabestation vorhanden sind, und zwar ungeachtet dessen, ob der Antrieb über den Aufgabewalzen- bzw. -rollensatz oder aber den Abgabewalzen- bzw. -rollensatz oder aber über einen zwischen beiden angeordneten separaten Antriebs-walzen- bzw. -rollensatz erfolgt, und bei Knickförderbändern zusätzlich zu diesen Stellen auch noch in den Bereichen fördermittelanlaufseitig und -ablaufseitig vom Umlenkwalzen- bzw. -rollensatz bzw. vom Niederhaltewalzen- bzw. -rollensatz, und zwar in allen Fällen sowohl im Bereich des Obertrums als auch des Untertrums des Fördermittels, unerwünschte Möglichkeiten für das Einfallen bzw. Einbringen von Schmutz oder Fremdkörpern in das Innere des Tragrahmens des Bandförderers, wo hierdurch die Gefahr von Betriebsstörungen und/oder von Beeinträchtigungen der Hygiene bedingt wird und entsprechende Wartungs- bzw. Reinigungsmaßnahmen mit den entsprechenden gefürchteten Betriebstotzeiten bereits nach verhältnismäßig kurzen Betriebsintervallen erforderlich werden.

Es ist also höchst erwünscht, bei Bandförderern mit einfachen und kostengünstigen und erforderlichenfalls auch im Wege der Nachrüstung schnell und bequem in Wirkung bringbaren Mitteln diesen Mißständen abzuhelfen und den Bandförderer gegen gefährlichen Einzug von Gliedmaßen oder Kleidungsstücken ebenso wie gegen unerwünschtes Eindringen von Schmutz oder Fremdkörpern an den beschriebenen Öffnungen sichern zu können.

Eine solche Aufgabe wird erfindungsgemäß bei einem Bandförderer der eingangs beschriebenen Art dadurch gelöst, daß die Tragstücke mit von der Tragrahmenseite her nach innen verlaufenden, zumindest die Unterseite des Obertrums des Fördermittels untergreifenden, die Abdeckeinrichtung bildenden ohrenförmigen Abdeckgliedern versehen sind. Solche Abdeckglieder können bis dicht an die Oberflächen der Walzen oder Rollen herangeführt sein und damit allseitig den Spalt minimieren. Da sie an den beweglichen Tragstücken angeordnet sind, bewegen sie sich bei Einstellungsbewegungen der Tragstücke mit, so daß der erwünschte nur sehr kleine Spalt unverändert bleibt und es kann hierdurch zusätzlich ein Nachstellen irgendwelcher Abdeckeinrichtungen vermieden werden. Gleichzeitig wird durch eine solche Einrichtung die Einzeleinstellung der Tragstücke nicht behindert und es kann die entsprechende Spaltabdeckung sehr leicht gehalten werden, so daß dadurch das Gesamtgewicht nicht nennenswert erhöht wird.

Nach einer Ausgestaltung der Erfindung ist vorgesehen, daß die Tragstücke mit die Unterseite des Obertrums des Fördermittels untergreifenden und das Untertrum des Fördermittels über- oder untergreifenden ohrenförmigen Abdeckgliedern versehen sind. Hierbei ist mit untergreifen stets gemeint, daß das Abdeckglied auf der fördergutfernen oder inneren Seite des Fördermittels liegt, während übergreifen bedeutet, daß das Abdeckglied sich fördergutseitig vom Fördermittel bzw. auf dessen Außenseite erstreckt.

Je nach Konstruktion des Bandförderers kann eine zugriffsgefährdete Öffnung beschriebener Art auf einer oder beiden Tragrahmenseiten auftreten und wird dann mittels eines Abdeckgliedes nach der Erfindung oder mehrerer derselben gesichert, wobei dies sowohl für das Aufgabeals auch das Abgabeende des Bandförderers ebenso wie für den Zulauf- und/oder den Ablaufbereich einer ggfls. zwischen beiden angeordneten separaten Antriebsstation und auch für den Zulauf- und/oder Ablaufbereich der Führungseinrichtung und/oder der Niederhalteinrichtung an der Knickstelle einer Knickbandausführung gilt. Dabei ist weiterhin hervorzuheben, daß die Erfindung ungeachtet der vorstehend beschriebenen Einsatzart für die Sicherung von zugriffsgefährdeten Öffnungen sowohl im Bereich jeweils des Obertrums oder des Untertrums des Fördermittels allein oder aber gleichzeitig beider Trums Verwendung finden kann.

Bei der Ausgestaltung der Erfindung hat sich eine Ausführungsform besonders bewährt, bei der mindestens eines der Abdeckglieder als Leiteinrichtung für die Zu- oder Abführung des Ober- bzw. Untertrums des Fördermittels zu der bzw. den Walzen bzw. Rollen ausgebildet ist. Dabei kann mit Vorzug das als Leiteinrichtung ausgebildete Abdeckglied tragrahmeninnenseitig oder aber auch tragrahmenaußenseitig von dem zugeordneten Ober- oder Untertrum des Fördermittels dessen fördergutferner Oberfläche als Auflage bzw. dessen fördergutseitiger Oberfläche als Anlage dienend angeordnet sein. In diesen Fällen wird nämlich in vorteilhafter Weise jedes Abdeckglied auch noch mit einer weiteren Funktion ausgenutzt, in dem es entsprechend seiner Oberflächenkonturierung und insbesondere auch seiner Anordnung zusätzlich zu seiner Sicherungsfunktion auch noch dafür herangzogen wird, für die den zugriffsgefährdeten Öffnungen benachbarten bzw. diese begrenzenden Seitenbereiche des betreffenden Trums des Fördermittels als Stützung und Führung zu dienen, so daß sogar größere Längen solcher zwischen Tragrahmen und Fördertrumseitenbereich bestehender Öffnungen in Förderrichtung bzw. Längsrichtung des Bandförderers gesichert und gleichzeitig dem entsprechenden Längenbereich des Fördermitteltrums eine dieses gegen unerwünschte oder unzulässige Durchhängebelastung sichernde Unterstützung geboten werden kann. Dies wirkt sich besonders vorteilhaft dann aus, wenn es sich um größere Längen des Fördermitteltrums in Förderrichtung handelt, die ohne eine solche Ausnutzung des Abdeckgliedes bzw. der Abdeckglieder nach der Erfindung auch als Leiteinrichtung für das betreffende Fördermitteltrum häufig einer unzulässig hohen Betriebsbelastung aufgrund übermäßig großer freier Durchhängelänge ausgesetzt wären.

Es hat sich weiterhin als besonders vorteilhaft erwiesen, wenn die Abdeckeinrichtung zusätzlich mindestens ein Paar von sich von den gegenüberliegenden Längsholmen oder Seitenstegen des Tragrahmens her in Richtung der zur fördergurtseitigen Oberfläche des Ober- und/oder des Untertrums des Fördermittels normalen Mittellängsebene des Bandförderers erstreckenden Abdeckgliedern aufweist. Die Erfindung ist nämlich nicht auf Ausführungen von Bandförderern mit einem aus zwei einander gegenüberliegenden Längsholmen und einer Anzahl im Abstand zueinander angeordneter Quertraversen und ggfls. einem Abdeck- und/oder Schlürblech oder aber einem mit den beiden Längsholmen verbundenen Zwischenstück gebildeten Tragrahmen beschränkt, sondern kann zweckmäßig auch bei jeder anderen Tragrahmenausführung Verwendung finden, wie beispielsweise bei einem als einstückiges U- oder C-Profil mit oder ohne Aussteifung duch Quertraversen ausgebildeten Tragrahmen. Die Ausführung gemäß dem letztbeschriebenen untergeordneten Erfindungsgedanken kommt allerdings nur für solche Bandförderer in Betracht, bei denen zugriffsgefährdete Öffnungen beschriebener Art auf beiden Seiten des betreffenden Fördermitteltrums zwischen diesem und dem benachbarten Längsholm eines zusammengesetzten Tragrahmens oder dem benachbarten Seitensteg eines als einstückiges Profil ausgebildeten Tragrahmens vorhanden sind. Hierbei kann das bzw. mindestens eines der Abdeckglieder tragrahmenfest angeordnet sein. Sowohl für Erstausrüstungs- als auch für Nachrüstungszwecke vorhandener Bandförderer kann es ferner zu empfehlen sein, wenn das bzw. mindestens eines der Abdeckglieder am Tragrahmen lösbar festgelegt ist.

In diesem Zusammenhang ist darauf hinzuweisen, daß auch Ausführungen der Erfindung zweckmäßig sein können, bei denen gemeinsam ein oder mehrere tragrahmenfeste und tragstückfeste Abdeckglieder zur Verwendung kommen, die dann gemeinsam dazu beitragen, die erfindungsgemäße Sicherungsaufgabe und ggfls. gleichzeitig auch die Trumabstützung wahrzunehmen. Hierbei kann es sich bei allen Ausführungsformen als vorteilhaft erweisen, wenn in weiterer Fortbildung der Erfindung das bzw. die Abdeckglieder auf der Außenseite oder auf der Innenseite des zugeordneten Längsholms oder Seitenstegs des Tragrahmens oder des zugeordneten Tragstückes der Lagerungseinrichtung für die Walzen bzw. Rollen festgelegt ist bzw. sind. Hier können konstruktive Gesichtspunkte insbesondere im Hinblick auf wirtschaftliche Fertigung der Abdeckglieder und/oder Forderungen bezüglich des Betriebes des Bandförderers und der Hygiene desselben sowie der Art der Aufstellung und ggfls. des Anschlusses desselben an vor- und/oder nachgeschaltete Aggregate einer Förderstrecke sowie auch hinsichtlich der Einfachheit und Schnelligkeit der Montage und Demontage ausschlaggebend sein.

Es hat sich weiter besonders bewährt, wenn für Ausführungen, bei denen gleichzeitig Abdeckglieder sowohl für das Obertrum als auch für das Untertrum des Fördermittels vorgesehen sind, die Abdeckglieder für Ober- und Untertrum des Fördermittels mit gleichem Abstand von der benachbarten Längsrandkante des Tragstückes vorzugsweise mit dieser fluchtend, angeordnet sind. Von Vorteil ist weiterhin, wenn bei solchen Ausführungen mit nach der Erfindung geschütztem Ober- und Untertrum des Fördermittels die einem Längsholm des Tragrahmens oder einem Tragstück der Lagerungseinrichtung für die Walzen bzw. Rollen zugeordneten Abdeckglieder für Ober- und Untertrum des Fördermittels mit gleichem Abstand von der jenseits der Walzen- bzw. Rollenachse gelegenen Stirnkante des Längsholms bzw. Tragstücks angeordnet sind. Durch beide Maßnahmen für sich allein und erst recht durch deren Zusammenspiel lassen sich im Sinne der der Erfindung zugrunde liegenden Aufgabe weitere Rationalisierungen von Lagerhaltung an für die Erstellung von Bandförderern unterschiedlicher Ausführungen und Größen erforderlichen Einzelteilen und deren Montage insoweit erreichen, als in solchen Fällen sowohl Längsholme für die Erstellung des Tragrahmens als auch dessen gesamte Breite bildende Profilstücke ebenso wie auch die Tragstücke für die Erstellung der Lagerungseinrichtung der erforderlichen Walzen bzw. Rollen nicht mehr in Rechts- und Linksausführung vorrätig gehalten zu werden brauchen, sondern man mit jeweils einer einzigen Ausführung dieser Einzelteile auskommt.

Im Interesse der Nutzung vorhandener Längsholme und/oder Tragstücke, die für die Ausführungen von Bandförderern herkömmlicher Art dienen, hat es sich sowohl für die Ersterstellung von Bandförderern nach der Erfindung als auch für die Um- bzw. Nachrüstung herkömmlicher Ausführungen auf die Erfindung als vorteilhaft erwiesen, wenn mindestens eines der Abdeckglieder als Mitttelstück vorzugsweise aus Blech oder Kunststoff ausgebildet ist, das mit seinem zu einer zur Mittellängsachse des Bandförderers parallelen Ebene des benachbarten Tragstückes der Lagerungseinrichtung für die walzen- bzw. rollenparallelen Schenkel an diesem Tragstück festgelegt ist. Vorteilhaft kann dabei diese Festlegung des Winkelstücks jeweils so erfolgen, daß mindestens eines der als Winkelstück ausgebildeten Abdeckglieder in einer Stellung am benachbarten Tragstück der Lagerungseinrichtung für die Walzen bzw. Rollen festgelegt ist, in der sein anderer Schenkel parallel zur Längsachse des Tragstückes verläuft. Grundsätzlich ist zwar eine solche Ausbildung und Anordnung keineswegs erforderlich, da die die erfindungsgemäße Sicherungsabdeckung und ggfls. gleichzeitig auch Fördermittelunterstützung zwecks Führung desselben bildenden Winkelstücke auch mit gegenüber der Längsholmlängsachse geneigtem freien Schenkel in Arbeitsstellung sein können, zumal bei manchen Ausführungen von Bandförderern der Hauptverlauf des betreffenden Trums in einer anderen Ebene verläuft als der entsprechenden Tangentialebene an die das betreffende Trum des Fördermittels umlenkenden Walzen bzw. Rollen. Eine Ausführung und Anordnung dieser Winkelstücke mit z. B. längsholmlängsparallelem freien Schenkel bietet jedoch auch hier ebenso wie bei den vorherbeschriebenen untergeordneten Erfindungsgedanken der hinsichtlich der Profilhöhe der Längsholme bzw. Seitenstege des Tragsrahmens symmetrischen Ausbildung und Anordnung der Abdeckglieder und auch der Symmetrie der Ausbildung und Anordnung von von einem Tragstück der Lagerungseinrichtung abgestützten Abdeckgliedern für gleichzeitig Ober- und Untertrum des Fördermittels hinsichtlich der tragrahmenfernen Außenkante des Tragstücks den Vorteil, auf Rechts- und Linksausführungen verzichten und statt dessen mit einer einzigen Ausführung auskommen zu können.

Für bestimmte Ausführungen von Bandförderern, und zwar insbesondere solche, bei denen aus Gründen besonderer Leichtbauweise eine zusätzliche Aussteifung der Gesamtkonstruktion von sowohl Tragrahmenwalzen als auch Lagerungseinrichtung für die Walzen bzw. Rollen entfallen soll, hat es sich als zweckmäßig erwiesen, wenn nach einem alternativen untergeordneten Erfindungsgedanken das bzw. mindestens eines der Abdeckglieder als U- oder C-Profil vorzugsweise aus Blech oder Kunststoff ausgebildet ist, das mit seinen jeweils zu einer zur Mittellängsebene des Bandförderers parallelen Ebene des benachbarten Längsholms oder Seitenstegs des Tragrahmens oder des benachbarten Tragstücks der Lagerungseinrichtung für die Walzen bzw. Rollen parallelen Seitenstegen an diesem Längsholm oder Seitensteg bzw. Tragstück festgelegt ist. Dabei kann auch hier mit Vorzug die Abdeckgliedausführung und -anordnung so getroffen sein, daß es sich in einer Arbeitsstellung befindet, in der sein brückenartiger Mittelsteg parallel zur Längsachse des es halternden Längsholmes oder Seitensteges bzw. Tragstückes verläuft. Es ist ersichtlich, daß hier unter Beibehaltung der bereits beschriebenen Vorteile der als Winkelstücke ausgebildeten Abdeckglieder durch die Ausgestaltung des Abdeckglieds nach diesem untergeordneten Erfindungsgedanken auch noch eine für die Verbesserung der Biege- und Verwindungssteifigkeit der gesamten Gerüstkonstruktion des Bandförderers nicht selten erwünschte brückenartige . Aussteifung derselben erzielt werden kann.

Für bestimmte Einsatzfälle hat sich bei Ausführungen der Erfindung mit lösbar festgelegtem bzw. festgelegten Abdeckgliedern jedoch eine Abdeckglied-Halterung besonders bewährt, bei welcher das bzw. die Abdeckglieder gegenüber dem zugeordneten Tragstück der Lagerungseinrichtung für die Walzen bzw. Rollen schwenkbar und feststellbar an diesem festgelegt ist bzw. sind. Dabei kann bzw. können das bzw. die Abdeckglieder jeweils mittels einer auf der tragrahmenfernen oder auf der tragrahmennahen Seite der Walzen bzw. Rollen angeordneten Steckverbindung aus einem längsholm- oder seitensteg- bzw. tragstückfesten Steckzapfen und einer abdeckgliedfesten Aufnahmebuchse für diesen oder einem abdeckgliedfesten Steckzapfen und einer längsholm- oder seitensteg- bzw. tragstückfesten Aufnahmebuchse für diesen festgelegt sein. Auch hier ergeben sich die bereits beschriebenen Vorteile solcher Steckverbindungen. Die Schwenkanlenkung des Abdeckgliedes bzw. der Abdeckglieder eröffnet nicht selten eine besondere konstruktive Freizügigkeit und kann nicht unerheblich zur Erleichterung der Montage und/oder Demontage des- bzw. derselben beispielsweise zu Inspektions- oder Wartungszwecken beitragen und auch sonst die Handhabung erleichtern.

Weiterhin kann zweckmäßig vorgesehen sein, daß das bzw. die Abdeckglieder jeweils an seinem bzw. ihrem walzen- bzw. rollenfernen Ende für die gleitende Bewegung tragrahmenfest abgestützt ist bzw. sind. Ergänzend können die Abdeckglieder ein abgekröpftes walzen- bzw. rollenfernes Ende aufweisen. Ungeachtet der Art, wo und wie die Abstützung des Abdeckgliedes bzw. der Abdeckglieder nach der Erfindung erfolgt, kann dieses bzw. können diese gemäß einer anderen Weiterbildung der Erfindung ein etwa Z-förmig gegenüber seinem bzw. ihrem walzen- bzw. rollennahen Ende abgewinkeltes walzen- bzw. rollenfernes Ende aufweisen. Andererseits hat es sich als für die meisten Einsatzfälle noch zweckmäßiger, weil einfacher und wirtschaftlicher herstellbar und zu montieren bzw. demontieren erwiesen, wenn das bzw. die Abdeckglieder jeweils mittels einer tragrahmenfernen und/oder einer tragrahmennahen oder mittels zweier auf der tragrahmenfernen oder der tragrahmennahen Seite oder auf beiden Seiten der Walzen bzw. Rollen angeordneten bzw. angeordneter Steckverbindungen aus jeweils einem längsholm- oder seitensteg- bzw. tragstückfesten Steckzapfen und einer abdeckgliedfesten Aufnahmebuchse für diesen oder einen abdeckgliedfesten Steckzapfen und einer längsholm- oder seitensteg- bzw. tragstückfesten Aufnahmebuchse für diesen festgelegt ist bzw. sind. Diese Ausführung ermöglicht nämlich den Verzicht auf, auch dann, wenn diese handelsüblich verfügbar sind, verhältnismäßig kostenaufwendige Schraubelemente oder das Einbringen von Gewindelöchern durch die Möglichkeit der Verwendung einfachen Rundstangenstahlprofils im Zusammenwirken mit beispielsweise während der Biegeverformungen der rahmenbildenden Teile in diese einbringbaren Stanzlöchern oder aber einfachen Bohrungen.

Es kann weiterhin vorteilhaft sein, wenn das bzw. die Abdeckglieder mittels einer Schiebeführungseinrichtung längsholm- oder seitenstegseitig abgestützt ist bzw. sind. Hierbei ist eine besonders einfache und doch ausreichend betriebssichere Ausführung dadurch gekennzeichnet, daß das bzw. die Abdeckglieder durch Auflage auf einer Quertraverse des Tragrahmens abgestützt ist bzw. sind.

Obgleich im Rahmen der Erfindung Abdeckgliedausführungen praktisch beliebiger Art möglich sind und für die verschiedensten Einsatzzwecke unterschiedlich zweckmäßig sein können, hat sich insbesondere, jedoch nicht ausschließlich, für Nachrüstungszwecke bestehender Bandförderer herkömmlicher Ausführung eine Weiterbildung der Erfindung besonders bewährt gemäß der das bzw. die Abdeckglieder jeweils mit seinem bzw. ihrem walzen- bzw. rollennahen Ende an einer am zugeordneten Längsholm oder Seitensteg des Tragrahmens bzw. Tragstücks der Lagerungseinrichtung für die Walzen bzw. Rollen festgelegten Tragstange vorzugsweise zwei paarweise einander gegenüberliegende oder ein einziges den Zwischenraum zwischen diesen einander gegenüberliegenden Längsholmen oder Seitenstegen bzw. Tragstücken überbrückendes Abdeckglied(er) an einer an diesen Längsholmen oder Seitenstegen bzw. Tragstücken festgelegten Tragstange befestigt ist bzw. sind. Dabei kann bzw. können das bzw. die Abdeckglieder jeweils an der zugeordneten Tragstange durch Verschweißen, Verkleben, Verschrauben, Verklemmen oder Verstiften festgelegt sein, wobei sein bzw. ihre bezüglich dieser Festlegungsstelle walzen- bzw. rollenferne(r) Anschlußbereich(e) um diese Tragstange herum gebördelt ist bzw. sind. Ersichtlich ist eine solche Ausführung der Erfindung besonders einfach und praktisch an jedem Einsatzort eines Bandförderers ohne Notwendigkeit größerer bzw. maschineller und entsprechend kostspieliger Werkzeugausstattung herstellbar und höchst einfach in Arbeitsstellung bringbar.

Vornehmlich für Sonderfälle kann es ferner empfehlenswert sein, wenn mit einer anderen Fortbildung der Erfindung die Abdeckeinrichtung für Veränderung der Größe des das Bewegungsspiel für das Ober- und/oder das Untertrum des Fördermittels gewährenden Abstandes ausgebildet ist. Dabei kann mit Vorzug die Abdeckeinrichtung mindestens ein in seiner wirksamen Breite in Richtung auf die zur fördergutseitigen Oberfläche des Fördermittels normale Mittellängsebene des Bandförderers einstellbares Abdeckglied aufweisen. Hierdurch wird es im übrigen möglich, im Interesse der durch die Erfindung angestrebten Rationalisierung Abdeckglieder vorfertigen und auf Lager halten zu können, die für unterschiedliche Bandfördererausführungen bzw. -größen oder -typen gleichermaßen verwendbar sein soll.

In die gleiche Richtung zielt eine andere zweckmäßige Fortbildung der Erfindung, gemäß welcher die Abdeckeinrichtung für Änderung der Größe ihres Abstandes zur zugeordneten Walzen- bzw. Rollenanordnung ausgebildet ist. Dabei kann zweckmäßig das bzw. mindestens eines der Abdeckglieder für Veränderung seines Abstandes zur zugeordneten Walzen- bzw. Rollenanordnung verschiebbar und in gewünschter Arbeitsstellung festlegbar an dem an den zugeordneten Längsholmen oder Seitenstegen des Tragrahmens bzw. an dem bzw. den zugeordneten Tragstücken der Lagerungseinrichtung für die Walzen bzw. Rollen gehaltert sein.

Im folgenden wird die Erfindung anhand einiger bevorzugter Ausführungsbeispiele, wie in den Zeichnungen schematisch dargestellt, rein beispielsweise näher erläutert. Dabei zeigen :

Fig. 1 in schaubildlicher Darstellung mit herausgebrochenem Mittelstück eines Längsholms eine Seite eines Tragrahmens einer Bandfördervorrichtung nach der Erfindung,

Fig. 2 in der Darstellung gemäß Fig. 1 entsprechender Darstellung eine andere Ausführungsform eines Tragstückes der Lagerungseinrichtung für eine Umlenk- bzw. Aufgabe- oder Abgabewalze,

Fig. 3 in der Darstellung gemäß Fig. 2 entsprechender Darstellung eine Abdeckhaube für den Tragrahmen,

Fig. 4 in der Darstellung gemäß Fig. 1 entsprechender Darstellung eine Seite eines Knickbeschlages des Tragrahmens einer als Knickbandförderer ausgebildeten Bandfördervorrichtung,

Fig. 5 in schematischer Darstellung eines vertikalen Längsschnittes das umlenkwalzenseitige Ende einer Bandfördervorrichtung ohne Darstellung des Tragrahmens, und

Fig. 6 in Draufsicht zwei verschiedene Ausführungen von lösbar am Tragrahmen festgelegten Abdeckgliedern.

Dabei sind einander entsprechende Einzelteile jeweils mit gleichen Bezugszeichen gekennzeichnet.

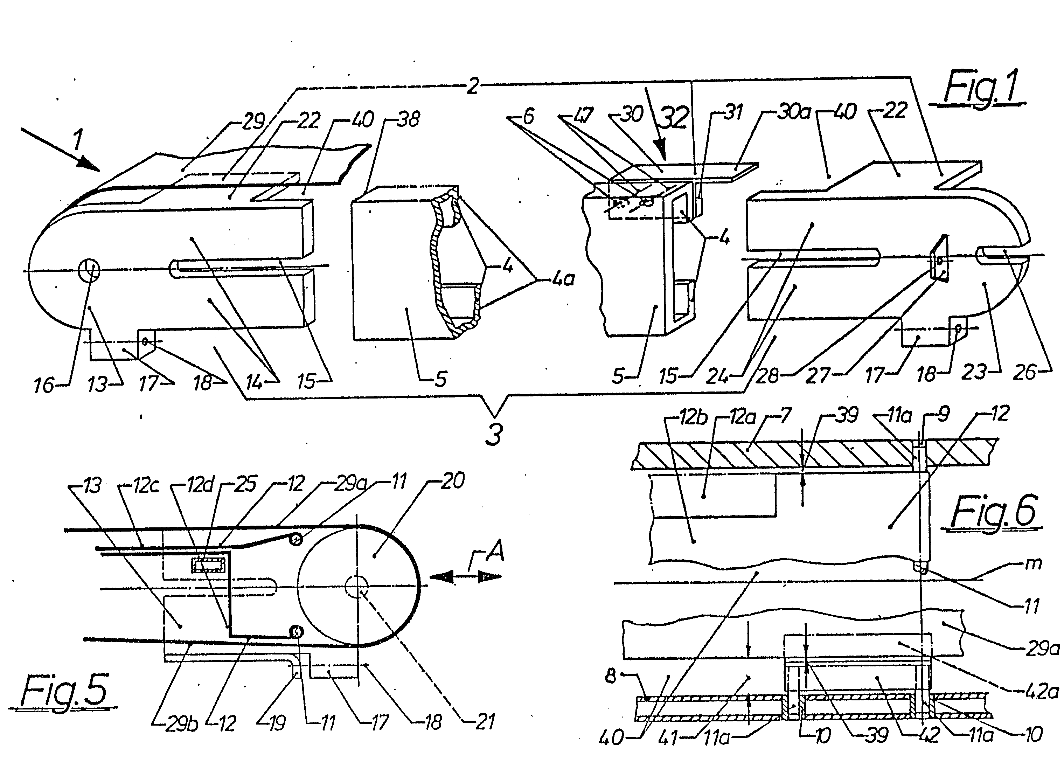

Die als Ganzes mit 1 bezeichnete Bandfördervorrichtung nach der Erfindung weist einen in Fig. 1 mit 3 bezeichneten Tragrahmen auf, der aus einem oder mehreren in Tragrahmenlängsrichtung hintereinander angeordneten und miteinander verbundenen Längsholmen 5, die sich paarweise gegenüberliegen und von denen nur einer mit seinen beiden Endbereichen dargestellt ist, während sein Mittelbereich weggebrochen ist, und beidseitig jeweils einem Paar von Tragstücken 13 bzw. 23 von Lagerungseinrichtungen für Umlenk- bzw. Aufgabe- oder Abgabewalzen gebildet ist, von denen eine in Fig. 5 dargestellt und mit 20 bezeichnet ist. Beim in Fig. 1 dargestellten Ausführungsbeispiel weist der Tragrahmen 3 als C-Profile ausgebildete Längsholme 5 auf, die jeweils paarweise gegenüberliegend durch Quertraversen miteinander verbunden und ausgesteift sind, von denen eine in Fig. 5 dargestellt und mit 25 bezeichnet ist. Der Tragrahmen 3 könnte aber auch in Querrichtung einstückig ausgebildet sein, ohne daß dies dargestellt ist, indem ein eine das Obertrum 29a des Fördermittels 29 von seiner Unterseite her unterstützende Auflagefläche darbietendes C-Profilteil tragrahmenbildend mit seinem Bodensteg fördermitteltrumparallel und seinen Seitenstegen tragrahmenmittellängsebenenparallel angeordnet wird.

Beim dargestellten Ausführungsbeispiel sind in an sich bekannter Weise die Tragstücke 13 der Lagerungseinrichtung für beispielsweise die Antriebswalze der Bandfördervorrichtung und 23 für beispielsweise die Umlenk- bzw. Spannwalze für das Fördermittel 29 derselben in die freien Profilöffnungen der Längsholme 5 des Tragrahmens 3 mit ihren Führungsleisten 14 bzw. 24 eingeschoben und mittels in die Festlegungsschlitze 15 derselben eingreifender Schraubelemente in Arbeitsstellung festgelegt gehalten, wobei im übrigen notwendige Justierungsarbeiten oder Nachspannmaßnahmen beispielsweise mittels sich gegenüber dem Tragrahmen abstützender und in Gewindelöcher 18 in Spannasen 17 am zugeordneten Tragstück 13 bzw. 23 eingreifender Schraubelemente oder aber mittels sich einerseits gegenüber dem Tragrahmen und andererseits gegenüber einer Seitennase 27 am Tragstück beispielsweise über ein Gewindeloch 28 abstützender Schraubelemente, wie bei dem rechten Tragstück 23 in Fig. 1 veranschaulicht, vorgenommen werden können. Die beiden Tragstücke 23 der in Fig. 1 rechten Lagerungseinrichtung weisen sowohl als Einhängaufnahmen als auch als Schiebeführungen für die Achse oder Welle 21 (in Fig. 5 dargestellt) einer Umlenk- bzw. Aufgabe- oder Abgabewalze 20 oder eines Umlenk- bzw. Aufgabe- oder Abgabewalzen- oder -rollensatzes dienende stirnseitig offene Schlitze 26 auf, während bei der in Fig. 1 links dargestellten Lagereinrichtung gezeigt ist, daß diese Achse oder Welle 21 auch durch ein entsprechendes Aufnahmeloch 16 in dem betreffenden Tragstückpaar gebildet sein kann. Es ist ersichtlich, daß statt des Schlitzes 26 die Tragstücke 23 ein solches Wellen- bzw. Achsaufnahmeloch und umgekehrt die Tragstücke 13 statt eines solchen Loches 16 einen Aufnahme- bzw. u.-Führungsschlitz 26 aufweisen könnte.

In Fig. 5 ist eine bevorzugte Art einer tragrahmenseitigen Abstützung eines Tragstückes 13 veranschaulicht, indem nämlich zwischen dessen Unterkante und dem Seitensteg eines Längsholmprofils 5 (in Fig. 5 nicht dargestellt) ein als Anschlag dienender Stützwinkel 19 eingeschoben ist, dessen freies Ende die Stirnkante des Längsholmprofils 5, die beispielsweise die in Fig. 1 gezeigte Stirnkante 38 sein kann, übergreift und sich dadurch an und gegenüber diesem Längsholmprofil 5 und damit dem Tragrahmen 3 abstützt. Dabei wird durch diesen Stützwinkel 19 eine Stützfläche für ein in dem Gewindeloch 18 der Nase 17 geführtes Schraubelement, das lediglich durch seine strich-punktierte Mittellinie angedeutet ist, gebildet.

Mit besonderer Deutlichkeit ist aus Fig. 5 ersichtlich, daß etwa von der achsialen Länge der walzenachsfernen Hinterfläche des freien Schenkels des Stützwinkels 19, die der Stirnkante 38 des Längsholmprofils 5 des Tragrahmens 3 entspricht, bis etwa zur tangentialen Anlaufstelle des Obertrums 29a des Fördermittels 29 oder zur tangentialen Ablaufstelle des Untertrums 29b desselben ein zugriffsgefährdeter Raum zwischen Seitenkante des betreffenden Fördermitteltrums 29a bzw. 29b und dem benachbarten Tragrahmenprofil, z. B. 5, gebildet ist. Dieser ist beispielsweise in der unteren Hälfte von Fig. 6 dargestellt und mit 41 bezeichnet, während der gesamte Zwischenraum zwischen den einander gegenüberliegenden die Tragrahmenseiten bildenden Profilteilen, die — wie in Fig. 1 — als offenes Hohlprofil in Form eines C-Profils 5 oder aber — wie in Fig. 6 dargestellt — als Massivprofil 7 oder als geschlossenes Hohlprofil 8 ausgebildet sein können, mit 40 bezeichnet ist (z. B. Fig. 1 und Fig. 6).

6

Um diesen bei herkömmlichen Ausführungen von Bandfördervorrichtungen unvermeidlichen Zwischenraum 41 zwischen der als Ablauf- bzw. Anlaufkante für das betreffende Trum 29a bzw. 29b des Fördermittels 29 dienenden Stirnkante 38 und der in Tragrahmenlängsrichtung A benachbarten Stelle des tangentialen Anlaufs bzw. Ablaufs des betreffenden Trums 29a bzw. 29b des Fördermittels 29 an beispielsweise der benachbarten Umlenk- bzw. Aufgabe- oder Abgabewalze 20 einerseits und der innenseitigen Außenfläche des Tragrahmenprofils, beispielsweise der Außenebene 4a des Seitensteges 4 des Längsholmprofils 5 beim Ausführungsbeispiel gemäß Fig. 1, und der benachbarten Stirnseitenfläche des Fördermittels 29 andererseits, der zum Tragrahmeninneren hin offen ist, gegen unbefugten ebenso wie unbeabsichtigten Zugriff insbesondere während des Betriebes der Bandfördervorrichtung 1 zu schützen und zu sichern, ist durch die Erfindung eine Abdeckeinrichtung vorgesehen. Diese kann unterschiedliche Ausführungsformen aufweisen, von denen einige in den Fig. 1 bis 6 dargestellt und im folgenden beschrieben sind. Dabei ist von besonderer Bedeutung, daß diese Abdeckeinrichtungs-Ausführungen jedenfalls diesen vorstehend beschriebenen zugriffsgefährdeten Zwischenraum 41 zumindest so weit verschließen, daß ein Zugriff oder Einziehen von Kleidungsstücken od. dgl. während des Förderbetriebes praktisch ausgeschlossen ist. Dies wird dadurch erreicht, daß — wie in der oberen Hälfte von Fig. 6 beispielsweise veranschaulicht — ein vom Tragrahmen 3 getragenes Abdeckglied zumindest bis auf einen lediglich ein Bewegungsspiel für das Ober- und/oder das Untertrum 29a bzw. 29b des Fördermittels 29 gewährenden Abstand 39 den zugriffsgefährdeten Zwischenraum 41 überbrückend angeordnet ist.

Bei dem Ausführungsbeispiel gemäß Fig. 1 ist angedeutet, daß die ganz allgemein mit 2 bezeichnete Abdeckeinrichtung durch an den Tragstücken 13 bzw. 23 sich in Richtung auf die zur fördergutseitigen Oberfläche des Fördermittels 29 normale Mittellängsebene m erstreckend angeformte etwa ohrenförmige Abdeckglieder 22 gebildet sein kann, die von der Tragrahmen- bzw. Tragstückseite her zumindest bis auf einen Abstand 39 für ausreichendes Bewegungsspiel zur Stirnseitenfläche des betreffenden Trums 29a bzw. 29b des Fördermittels 29 an dieses heranreichen und mit Vorzug — wie in Fig. 1 dargestellt — eine solche Ausdehnung in Querrichtung aufweisen können, daß sie das betreffende Trum 29a bzw. 29b des Fördermittels 29 auch noch untergreifen. Hierdurch wird in dem Bereich zwischen walzenseitiger Stirnkante 38 des Tragrahmens 3 und An- bzw. Ablaufstelle des Fördermitteltrums 29a bzw. 29b an der bzw. den betreffenden Walze(n) bzw. Rolle(n) nicht nur eine tragrahmenfeste Abdeckung geschaffen, sondern auch noch eine Auflageunterstützung für das betreffende Fördermitteltrum. Dabei können je nach Walzen- bzw. Rollendurchmesser und Führungshöhe des betreffenden Fördermitteltrums 29a bzw. 29b bzw. Profilhöhe des Tragrahmens 3 bzw. höhenmäßiger Anordnung eines etwa vorgesehenen Schlürbleches od. dgl. die tragstückfesten Abdeckelemente 22 — anders als in Fig. 1 dargestellt — auch mit Neigung gegenüber der nach oben bzw. unten weisenden Stirnfläche des Tragstückes bzw. des Tragrahmens 3 bzw. seines Längsholmprofils 5 verlaufend angeordnet sein.

In Fig. 1 ist ferner auch noch eine alternativ zu der vorstehend beschriebenen tragstückfesten Abdeckeinrichtung 22 zur Verwendung bringbare andere Ausführung gezeigt, die als Ganzes mit 32 bezeichnet ist und sich besonders für Nachrüstung bestehender Bandfördervorrichtungen mit der Erfindung eignet. Diese Abdeckeinrichtung 32 besteht aus einem Paar von Abdeckwinkeln, von denen in Fig. 1 einer dargestellt ist. Jeder derselben wird mit seinem Seitensteg 31 am Seitensteg 4 des Längsholmprofils 5 des Tragrahmens 3 mittels in Gewindelöcher in diesem Seitensteg 31 des Abdeckwinkels 32 oder dem Seitensteg 4 des Längsholmprofils 5 vorgesehene Gewindelöcher eingreifender und entsprechende komplementär angeordnete Durchgangslöcher im jeweils anderen Steg durchgreifender oder in zueinander komplementärer Anordnung in beiden aneinander anliegend miteinander zu verbindenden Stegen 31, 4 vorgesehene Durchgangslöcher durchgreifender Schraubelemente festgelegt, die lediglich durch ihre strich-punktierten Mittellinien angedeutet und mit 47 bezeichnet sind. Wie dargestellt, können die Löcher in zumindest einem der genannten Stege, beispielsweise im Seitensteg 4 des Längsholmprofils 5, als Langlöcher ausgebildet sein, die in Fig. 1 mit 6 bezeichnet sind. Die Anordnung des Abdeckwinkels 32 am Tragrahmen 3 bzw. seinem Längsholmprofil 5 erfolgt zweckmäßig und mit Vorzug so, daß sein Decksteg 30 auf einer das betreffende Trum des Fördermittels 29, hier das Obertrum 29a desselben, von seiner fördergutfernen Unterseite her unterstützend untergreift. Wie dargestellt, besitzt der Decksteg 30 des Abdeckwinkels 32 eine sich in Richtung der benachbarten Walze bzw. Rolle bzw. eines etwaigen Walzen- bzw. Rollensatzes erstreckende Verlängerungszunge 30a, mit der der am meisten gefährdete Bereich des zu sichernden Zwischenraums 40 bis 41 überdeckt wird. Die über Langlöcher 6 erfolgende Halterung des Abdeckwinkels 32 am Tragrahmen 3 bzw. dessen Längsholmprofil 5 ermöglicht es, sich durch entsprechende Verschiebung des Abdeckwinkels 32 in Rahmenlängsrichtung A relativ zum Tragrahmen 3 etwaigen beispielsweise durch erforderliche Nachspannmaßnahmen für das Fördermittel 29 bewirkten Versatzbewegungen der Walzen- bzw. Rollenachse und damit auch der Walze(n) bzw. Rolle(n) relativ zur benachbarten An- bzw. Ablaufstirnkante des Tragrahmens 3 so anzupassen, daß stets eine gute Sicherungsabdeckung des zugriffsgefährdeten Zwischenraums 40 bzw. 41 gewährleistet ist.

Es ist ersichtlich, daß in gleicher Weise auch tragstückfeste Abdeckeinrichtungen ausgebildet sein können, indem die betreffenden Tragstücke, zum Beispiel 13 und/oder 23, nicht die vorstehend beschriebenen einstückig angeformten Abdeckglieder 22 aufzuweisen brauchen, sondern mit lösbar an ihnen festgelegten Abdeckwinkeln nach Art der beschriebenen Abdeckwinkel 32 ausgerüstet sein können, die mit Vorzug in beschriebener Weise am jeweils zugeordneten Tragstück festgelegt sein und eine sich in Richtung der von diesem abgestützten Walzen- bzw. Rollenanordnung und/oder eine sich in Richtung des tragenden Tragrahmenteils, z. B. des benachbarten Rahmenlängsholms 5, erstreckende Verlängerungszunge ähnlich der Verlängerungszunge 30a des Abdeckwinkels 32 aufweisen können. Eine solche Ausführung eignet sich ersichtlich mit Vorzug für Nachrüstungszwecke an herkömmlichen Ausführungen von Bandfördervorrichtungen.

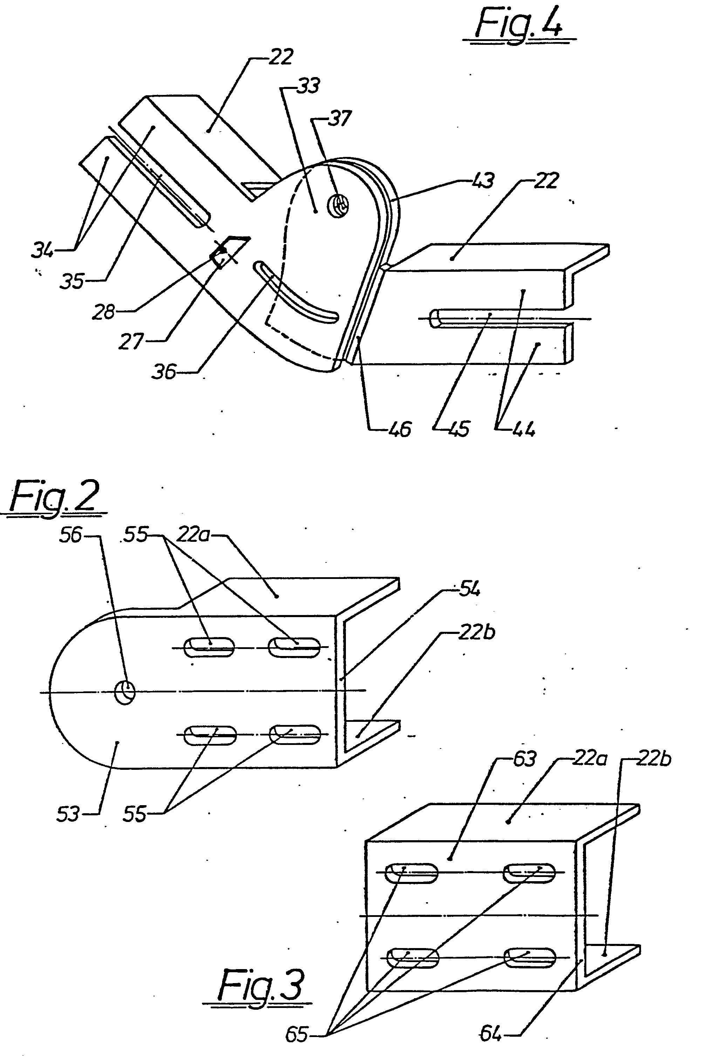

Diese Ausführungsform gemäß Fig. 2 entspricht im wesentlichen der gemäß Fig. 1, wobei lediglich als Beispiel die dem linken Tragstück 13 der Walzen- bzw. Rollen-Lagerungseinrichtung derselben entsprechende Ausführung mit einem hier mit 56 bezeichneten Aufnahmeloch für die Walzen- bzw. Rollensatz-Achse dargestellt ist, jedoch das hier wiedergegebene Tragstück 53 stattdessen auch mit einem Aufnahmeschlitz in der gleichen Weise hätte ausgerüstet sein können, wie das beim Tragstück 23 gemäß Fig. 1 der Fall und für dieses vorstehend beschrieben ist. Die Ausführung gemäß Fig. 2 unterscheidet sich von den bisher beschriebenen Ausführungen durch die Tatsache, daß das hier dargestellte Tragstück 23 Abdeckglieder 22a und 22b sowohl für das hin- als auch für das rücklaufende Trum des Fördermittels 29 aufweist. Diese etwa ohrenförmigen Abdeckelemente 22a, 22b sind in der gleichen Weise, wie dies bei den Abdeckelementen 22 der Tragstücke 13 und 23 gemäß Fig. 1 dargestellt ist, mit ihrer Außenoberfläche fluchtend mit der oberen und unteren Stirnseitenfläche des Tragstückes 53 angeordnet. Sie könnten aber auch mit einem Abstand von der jeweils benachbarten Stirnseitenfläche des Tragstückes 53 angeordnet sein, wobei jedoch dieser Abstand bevorzugt gleich sein sollte, um die Nutzung einer solchen Tragstückausführung für beide Tragrahmenseiten zu gewährleisten und dadurch Rechts- und Linksausführungen für die Lagerungstragstücke zu vermeiden. Auch die in Fig. 2 dargestellte fluchtende Ausführung ist für beidseitige Nutzung geeignet und vorgesehen.

Gegenüber den Tragstückausführungen 13 und 23 gemäß Fig. 1 unterscheidet sich das Tragstück 53 gemäß Fig. 2 auch noch dadurch, daß sein Mittelsteg 54 sich nicht über die tragrahmennahe Stirnseite der etwa ohrenförmigen Abdeckglieder 22a, 22b hinweg erstreckt. Dies hat seinen Grund darin, daß die Ausführung gemäß Fig. 2 für das zugeordnete Stirnende des Tragrahmens 3 bzw. von dessen Längsholmprofil 5 von außen her übergreifende oder auf dessen Innenseite fixierbare Festlegung an diesem vorgesehen ist. Aus diesem Grunde weist es statt eine Festlegungsschlitzes 15, der im übrigen durchaus auch hier hätte Verwendung finden können, zwei Reihen von Langlöchern 55 auf, durch welche Schraubelemente zu stecken sind, die entweder in in entsprechender Anordnung am zugeordneten Tragrahmenprofil vorgesehene Gewindelöcher eingreifen oder aber in entsprechender Anordnung vorgesehene Durchgangslöcher durchgreifen und mittels derer das betreffende Tragstück 53 am Tragrahmen 3 nach Wahl der geeigneten Arbeitsstellung durch Verschiebung in Längsrichtung dieser Langlöcher 55 in dieser festlegbar ist. Entsprechende Nachspannmaßnahmen oder Justierarbeiten können gleichermaßen höchst einfach vorgenommen werden. Hervorzuheben ist jedoch, daß auch eine Ausführung gemäß Fig. 2 mit sich über die tragrahmenseitige Stirnfläche der Abdeckglieder 22a, 22b hinweg erstreckenden Führungsleisten nach Art der Führungsleisten 14 bzw. 24 der Tragstücke 13 bzw. 23 gemäß Fig. 1 ausgerüstet sein kann. Dabei können, wenn es wünschenswert erscheinen sollte, daß die Länge dieser Führungsleisten nicht besonders groß gewählt wird, entweder die Abdeckelemente 22a und/oder 22b entsprechende Eingriffsschlitze für die Seitenstege 4 von C-förmig ausgebildeten Längsholmprofilen 5 des Tragrahmens 3 oder aber diese Seitenstege entsprechende Eingriffsschlitze für die Abdeckelemente 22a und/oder 22b aufweisen, um eine ausreichende Größe des möglichen Relativverschiebungsweges von Tragstück und Tragrahmen zu gewährleisten. Gleiches gilt im übrigen für die Tragstücke 13 und/oder 23 gemäß Fig. 1 und die jeweils benachbarten Stirnenden der Längsholmprofile 5. Im übrigen können in den stirnseitigen Endbereichen die Seitenstege 4 auch auf entsprechender Länge ausgeklinkt bzw. entfernt sein.

Bei dem in Fig. 3 dargestellten Ausführungsbeispiel handelt es sich um eine Abdeckeinrichtung in · Form eines Abdeckwinkels 63 mit Abdeckgliedern 22a und 22b, die sich in der gleichen Weise von einem Mittelsteg 64 wegerstrecken, wie dies vorstehend für das Ausführungsbeispiel gemäß Fig. 2 beschrieben ist. Dieser Abdeckwinkel 63, der vorzugsweise als Blechstanzteil ausgeführt sein kann, um besonders wirtschaftlich ein einfach und schnell herstellbares und bequem und rasch in Arbeitsstellung bringbares Bauteil geringen Gewichtes zu bieten, weist in ähnlicher Anordnung, wie für die Ausführung gemäß Fig. 2 bereits beschrieben, zwei Reihen Langlöcher 65 auf. Ersichtlich eignet sich diese Ausführung gleichfalls besonders für Nachrüstungszwecke an bestehenden Bandförderern herkömmlicher Ausführung, indem in den zugriffsgefährdeten Bereichen das Abdeckwinkelstück 63 von der Außenseite her das zugeordnete Rahmenprofil oder aber auch Tragstück übergreifend oder aber von der Rahmeninnenseite her an diesem so festgelegt werden kann, daß sein etwa ohrenartiges Abdeckglied 22a den zugriffsgefährdeten Zwischenraum 41 im Bereich des Obertrums 29a des Fördermittels 29 und sein Abdeckglied 22b einen entsprechenden zugriffsgefährdeten Zwischenraum im Bereich des Untertrums 29b desselben schützend abdeckt. Auch hier könnten grundsätzlich die Abdeckglieder 22a und/oder 22b mit sich über die Stirnkante des Mittelsteges 64 erstreckenden Verlängerungszungen ausgebildet sein, jedoch würde dadurch sich die Herstellung dieser Ausführung verteuern, ohne daß gegenüber einer entsprechenden Vergrößerung der Gesamtlänge eines solchen Teils ein wesentlicher Vorteil erreicht werden würde.

Im übrigen ist auch darauf hinzuweisen, daß die Ausführungen gemäß Fig. 2 und 3 sich besonders für Einsatz in Verbindung mit Tragrahmenausführungen mit sogenanntem offenem einstückigem C-Profil, das auch als sogenanntes Halbkastenprofil bezeichnet wird, eignen, wenngleich sie nicht auf eine solche Verwendung beschränkt sind, sondern auch in Verbindung mit Tragrahmenausführungen aus über Quertraversen miteinander verbundenen und ausgesteiften Längsholmprofilen beispielsweise gemäß Fig. 1 Einsatz finden können.

Die für als Knickbandförderer ausgebildete Bandfördervorrichtungen bestimmte Ausführung gemäß Fig. 4 entspricht im Prinzip der gemäß Fig. 1, wobei allerdings die den die Walzer- bzw. Rollenachse oder -welle tragenden Bereichen der Lagerungstragstücke 13 bzw. 23 gemäß Fig. 1 entsprechenden Bereiche von Außenstück 33 und Innenstück 43 des Knickbeschlages gemäß Fig. 4 in üblicher Weise ausgebildet sind, indem sie eine gemeinsame Bohrung 37 für den Durchtritt einer in herkömmlicher Weise auszuführenden Schwenkachse (nicht dargestellt) und einen zu deren Mittelpunkt bzw. Drehachse konzentrischen Kreisbogenschlitz 36 aufweisen, durch den ein nicht dargestelltes Schraubelement in herkömmlicher Weise hindurchgreift, mittels dessen Außenstück 33 und Innenstück 43 dieses Knickbeschlages in der als Arbeitsstellung gewählten winkelmäßigen Zuordnung zueinander festgelegt werden können. Das Außenstück 33 ist ähnlich wie das Tragstück 23 gemäß Fig. 1 mit Führungsleisten 34 und einem Festlegungsschlitz 35 zwischen diesen sowie einer sich nach außen wegerstreckenden Seitennase 27 mit einer Gewindebohrung 28 für die Aufnahme eines Schraubelementes ausgestattet, mittels dessen der gesamte Knickbeschlag gegenüber dem dem Außenstück 33 desselben zugeordneten Tragrahmenteil bzw. -profil relativverschiebbar und in gewünschter Arbeitsstellung haltbar ist. Das Innenstück 43 dieses knickbeschlages ist in ähnlicher Weise mit Führungsleisten 44 und einem Festlegungsschlitz 45 zwischen diesen ausgerüstet und könnte gleichfalls eine sich nach außen wegerstreckende Seitennase 27 mit Gewindeloch 28 aufweisen wie das Außenstück 33, oder aber ebenso wie letzteres sich nach unten erstreckende Nasen 17 mit Gewindebohrungen 18, wie das bei dem Lagerungstragstücken 13 und 22 gemäß Fig. 1 gezeigt und vorstehend bereits beschrieben ist. Das Innenstück 43 ist überdies — wie dargestellt — mittels eines Abkröpfsteges 46 so ausgebildet, daß seine Führungsleisten 44 in der gleichen Außenebene liegen wie die Führungsleisten 34 des Außenstückes 33 des Knickbeschlages bzw. die Führungsleisten 44 und 34 von Innen- und Außenstuck desselben miteinander fluchten. Dies hat den Vorteil, daß auch die Tragrahmenkonstruktion beidseitig des Knickbeschlages in gleicher Weise ausgeführt sein kann.

Innenteil 43 ebenso wie Außenteil 33 des Knickbeschlages gemäß Fig. 4, von dem natürlich auf der gegenüberliegenden Tragrahmenseite ein komplementäres Gegenstück vorgesehen ist, weisen jeweils ein sich in der gleichen Weise, wie für die Ausführungen gemäß Fig. 1 bzw. 2 und 3 beschrieben, in der Richtung der Tragrahmenmittellängsebene m erstreckendes etwa ohrenförmiges Abdeckglied 22 auf. Auch hier gilt, daß dann, wenn — wie dargestellt — die Führungsleisten 44 bzw. 34 in Tragrahmenlängsrichtung nicht länger sind als die Abdeckglieder 22, entweder die jeweils zugeordneten Tragrahmenlängsholmprofile 5, sofern diese als C- oder sonstiges selbständiges Hohlprofil ausgebildet sein sollten, Führungsschlitze oder entsprechende Ausnehmungen für die Aufnahme der Abdeckglieder 22 oder aber diese entsprechende Aufnahmeschlitze für das Eingreifen entsprechender Stegbereiche des zugeordneten Tragrahmenlängsholmprofils aufweisen. Solche Schlitze in den Abdeckgliedern 22 sind in Fig. 4 jedoch nicht gezeigt, da der hier dargestellte Knickbeschlag eines Knickbeschlagspaares eines Knickbandförderers für Verwendung in Verbindung mit einer im Querschnitt einstückigen Tragrahmenausführung in Form eines U- oder C-Profils bestimmt ist. Im übrigen aber ist hervorzuheben, daß die Führungsleisten 44 des Innenstückes 43 und/oder die Führungsleisten 34 des Außenstückes 33 des Knickbeschlages in der gleichen Weise die tragrahmenseitige Stirnfläche des zugeordneten Abdeckgliedes 22 überragende Länge aufweisen können, wie das bei den Lagerungstragstücken 13 und 23 gemäß Fig. 1 dargestellt und für diese ebenso wie für die Ausführung gemäß Fig. 2 vorstehend beschrieben ist.

Abgesehen von den unterschiedlichen Ausführungsmöglichkeiten für die Tragrahmenkonstruktion zeigt Fig. 6 zwei andere bevorzugte Ausführungsformen von Abdeckeinrichtungen nach der Erfindung. So ist in der unteren Hälfte von Fig. 6 ein Abdeckglied 42 gezeigt, das als Winkelstück ausgebildet sein kann, um einen offenen und entsprechend zugriffsgefährdeten Zwischenraum 41 zwischen Rahmenseitenbereich, wie dieser durch den als Hohlprofil 8 ausgebildeten Längsholm gebildet ist, und Stirnseitenfläche bzw. Seitenkante des Fördermitteltrums 29a gegen unbefugten oder unbeabsichtigten Zugriff oder Einziehen von Kleidungsstücken od. dgl. sichernd abzudecken. Dabei ist darauf hinzuweisen, daß beispielsweise rechts von dem dargestellten Abdeckglied 42 sich die Lagerungseinrichtung für eine Umlenk- bzw. Aufgabe- oder Abgabewalze oder einen entsprechenden Rollensatz befindet, ohne dargestellt zu sein, indem diese(r) entweder unmittelbar im Tragrahmenende oder aber unter Zwischenschaltung entsprechender Tragstücke einer Lagerungseinrichtung drehbar gehaltert ist, die gleichfalls aus Gründen besserer Übersichtlichkeit nicht dargestellt sind und in beliebiger Weise ausgestaltet sein können, und daß sich auf der linken Seite an das Abdeckglied 42 anschließend eine Abdeckung des Zwischenraums 40 zwischen beiden einander gegenüberliegenden Tragrahmenseiten bzw. Längsholmprofilen 8 in Form eines zwar nicht dargestellten, das betreffende Trum des Fördermittels 29, hier das bruchstückhaft dargestellte Obertrum 29a, untergreifend überbrückenden Schlür- bzw. Stützbleches vorgesehen ist, das zwischen beiden gegenüberliegenden Tragrahmenseiten bzw. Längsholmen 8 befestigt ist. Das winkelförmige Abdeckglied 42 ist mittels zweier Deckzapfen 11a, die in entsprechende Aufnahmelöcher im zuegeordneten Längsholmprofil 8 eingreifen, die aufgrund der Ausführung desselben als Hohlprofil zweckmäßig mit einer Steckbuchse 10 ausgefüttert sein können, am Tragrahmen 3 lösbar gehaltert. Dabei ist seine Breitenerstreckung so gewählt, daß sein nach unten weisender Winkelsteg (in der unteren Hälfte von Fig. 6 durch eine gestrichelte Linie dargestellt) in einem für unbefugten oder unbeabsichtigten Zugriff ungefährlichen Abstand 39 zur Stirnseitenfläche bzw. Randkante des betreffenden Fördermitteltrums, hier z. B. des Obertrums 29a des Fördermittels 29, verbleibt, der diesem jedoch ein ausreichendes Bewegungsspiel gewährleistet.

In der unteren Hälfte von Fig. 6 ist in strich-punktierten Linien aber auch eine weitere mit 42a bezeichnete Ausführungsform angedeutet, bei welcher sich das Abdeckglied bis unterhalb des betreffenden Fördermitteltrums, beispielsweise des dargestellten Obertrums 29a, erstreckt. Hiermit wird der gleiche Effekt erreicht, wie beispielsweise bei den Abdeckgliedern 22 bzw. 32 gemäß Fig. 1. Dabei kann das Abdeckglied 42a durch ein entsprechend angeordnetes und durch die beiden Steckzapfen 11a tragrahmenfest gehaltertes T-Profil oder aber auch durch ein Winkelprofil gebildet sein, das nach Art des Abdeckwinkels 32 gemäß Fig. 1 tragrahmenfest gehalten ist. Es kann aber auch ein mit seinem Innenbereich nach unten offen angeordnetes U-Profil Verwendung finden, und zwar dies sowohl bei der mit 42 bezeichneten als auch bei der mit 42a bezeichneten Ausführung. In beiden Fällen wäre es dann zu bevorzugen, lediglich den einen Seitenflansch des U-Profils zu durchbohren, um durch diesen einen Steckzapfen 11a hindurchstecken zu können, der auf der Innenseite des gegenüberliegenden Seitensteges dieses Profils aufstoßen und dort und/oder auf der Innenseite der von ihm durchgriffenen Bohrung durch Verschweißen, beispielsweise mittels weniger Punktschweißstellen, festgelegt sein könnte.

In der oberen Hälfte von Fig. 6 ist eine andere bevorzugte Ausführungsform der Erfindug veranschaulicht. Zwar ist hier der Tragrahmen in Form eines Stückes eines als Massivteil ausgebildeten Längsholmes 7 dargestellt, jedoch könnte ohne weiteres der Tragrahmen 3 auch als Hohlprofil 8, wie beispielsweise in der unteren Hälfte von Fig. 6, oder als C-Profil, wie in Fig. 1, oder aber in Form eines anderen nicht gezeigten Profils, beispielsweise auch eines in Querrichtung einstückigen C- oder U-Profils mit die Tragrahmenseiten bildenden Seitenstegen, ausgeführt sein. In jedem Falle ist an einer geeigneten Stelle eines zur Rahmenmittellängsebene m etwa parallelen Steges oder Flansches der Tragrahmenkonstruktion ein Aufnahme- bzw. Steckloch 9 für den Steckzapfen 11a einer Tragstange 11 vorgesehen, mit der ein Abdeckglied 12 etwa durch Umbördelung, wie diese beispielsweise in Fig. 5 gezeigt ist, und erforderlichenfalls durch entsprechende Festlegung mittels Verklebung, Verquetschung, Verschweißung, Verlötung od. dgl. verbunden ist. Diese Tragstange ersdreckt sich den gesamten Zwischenraum 40 zwischen beiden einander gegenüberliegenden Tragrahmenseiten bzw. Längsholmen 7 überbrückend über praktisch die gesamte Fördererbreite, und ihre Steckzapfen 11a sind in die tragrahmenprofilseitigen Aufnahmelöcher 9, die bei einer Hohlprofilausführung, wie in der unteren Hälfte von Fig. 6 dargestellt, zweckmäßig mit einer Steckbuchse 11a ausgefüttert sein können, eingeschoben. Die Tragstange 11 trägt dabei ein den gesamten genannten Zwischenraum 40 bis auf ein Bewegungsspiel 39, das in der oberen Hälfte von Fig. 6 dargestellt ist, übergreifendes einstückiges Abdeckglied 12 oder aber in entsprechender Anordnung tragrahmennah festgelegte schmalere Abdeckglieder. Die Eigenart dieser Ausführung ist, daß hier das Abdeckglied 12 nicht in einer durch die geschilderten oder durch andere Maßnahmen vorbestimmten Stellung gehaltert ist, sondern den Freiheitsgrad besitzt, sich relativ zum es tragenden Bauteil verschwenken zu können. Dies kann neben allfällig vorhandenen herstellungstechnischen und montagemäßigen Vorteilen auch noch konstruktive Vereinfachungen und betriebsmäßige Erleichterungen mit sich bringen. Ersichtlich braucht nämlich eine solche Ausführung lediglich in ein gerade bei herkömmlichen Bandfördervorrichtungen meist vorhandenes Loch einer Lochrasteranordnung in der Tragrahmenseitenwand mit den Steckzapfen 11a ihrer Tragsdange 11 eingefügt zu werden, ohne weitere arbeitsintensive Maßnahmen zu bedingen, wenn dafür Sorge getragen ist, daß die Länge ihres Abdeckgliedes 12 so groß ist, daß dieses von einer zwei einander gegenüberliegende Tragrahmenlängsholme 5 bzw. 7 bzw. 8 miteinander verbindenden Quertraverse 25 abgestützt wird, damit sein durch eine fahnenartige Verlängerung gebildetes Schwanzende nicht nach unten fallen und in Konflikt mit dem Untertrum 29b des Fördermittels 29 geraten kann.

In der oberen Hälfte von Fig. 6 ist durch ausgezogene Linien angedeutet, daß das Abdeckglied 12, das hier keineswegs als Unterstützung für das benachbarte Trum des Fördermittels 29, beispielsweise dessen Obertrum 29a, zu dienen braucht, dies aber bei entsprechender Ausführung kann, einen lediglich im Mittelbereich des Zwischenraums 40 zwischen beiden Tragrahmenseiten bzw. Längsholmen 5 bzw. 7 bzw. 8 gelegenen sich in Richtung von der benachbarten Walzen- bzw. Rollenanordnung weg erstreckenden Schwanzbereich 12b aufweist. Durch eine strich-punktierte Linie ist jedoch auch angedeutet, daß der zwischen dieser und dem durch eine ausgezogene Linie begrenzten Mittelbereich des Abdeckgliedes 12 gelegene Fahnenbereich 12a keineswegs ausgeklinkt bzw. ausgenommen zu sein braucht, sich vielmehr das Abdeckglied 12 über seiner gesamten Länge mit unveränderter Breite erstrecken kann.

Während in Fig. 6 grundsätzlich veranschaulicht ist, daß und wie solche Abdeckglieder 42 bzw. 12 tragrahmenseitig an einem feststehend verbleibenden Teil des Tragrahmens 3, beispielsweise einem Längsholmprofil 5 bzw. 7 bzw. 8 desselben, gehaltert sein können, zeigt Fig. 5, daß in gleicher Weise dies auch durch Halterung an einem Tragstück oder einem Tragstückpaar einer Walzen- bzw. Rollenlagerung möglich ist. In Fig. 5 ist beispielsweise eine Tragstange 11 gezeigt, die in einem Tragstück 13 einer Lagerungseinrichtung für eine Walze 20 mit Achse oder Welle 21 relativverschwenkbar nahe dem Obertum 29a des Fördermittels 29 gelagert ist und ein Abdeckglied 12c aufweist, das in geeigneter Weise gekröpft ist, um einen Schwanzbereich 12c ausreichender Länge zum Aufliegen auf einer Quertraverse 25 zu bringen. Gleichermaßen ist aber auch eine am Tragstück 13 untertrumnah schwenkbar festgelegte Tragstange 11 gezeigt, die ein Abdeckglied 12 trägt, dessen Schwanzteil 12d etwa Z-förmig abgewinkelt ist und einen freien Endbereich ausreichender Länge aufweist, um von einer Quertraverse 25, im dargestellten Ausführungsbeispiel der gleichen Quertraverse, welche auch das obertrumnahe Abdeckglied 12 mit dem Schwanzende 12c abstützt, getragen zu werden. Es ist ersichtlich, daß bei dieser Ausführung, für die im übrigen bezüglich der Art der Festlegung das Gleiche gilt, wie vorstehend bereits für die beiden Ausführungsformen gemäß Fig. 6 beschrieben, die Abdeckglieder 12, da sie von einem Tragstück 13 einer Wellen- bzw-. Rollenlagerungseinrichtung getragen sind, jeder etwaigen Versatzbewegung der Walzen- bzw. Rollenachse 21 relativ zur die Ablauf- bzw. Anlaufkante des Tragrahmens 3. bildenden Stirnkante 38, welcher zuordnungsmäßig die Innen- oder Außenseite des freien Schenkels des Stützwinkels 9 gemäß Fig. 5 entsprechen mag, in Richtung des Doppelpfeiles A, wie das beispielsweise im Zuge von Justier- oder Nachspannmaßnahmen der Fall sein könnte, folgen, ohne dabei in irgendeiner Weise den zu sichernden zugriffgefährdeten Zwischenraum 41 freizugeben, da die Abdeckglieder 12 ausreichende von der bzw. den Quertraverse(n) 25 abgestützte Schwanzlänge aufweisen, mit der sie auf der betreffenden Quertraverse gleitend schiebebeweglich geführt und abgestützt sind. Ohne daß dies dargestellt wäre, ist aber auch eine Halterung eines vorstehend beschriebenen Abdeckgliedes 42 nach Art der unteren Hälfte von Fig. 6 auch bei Abstützung desselben durch ein gegenüber dem Tragrahmen 3 relativverschiebliches Tragstück einer Walzen- bzw. Rollenlagerungseinrichtung ohne weiteres möglich. Weist dieses dabei es noch in Längsrichtung verlängernde Zungen etwa nach Art der Verlängerungszunge 30a des Abdeckwinkels 32 gemäß Fig. 1 auf, so können auch hier von der Verschiebestellung der Walzen- bzw. Rollenachse bzw. -welle 21 relativ zum benachbarten Ende des Tragrahmens 3 bzw. dessen An- bzw. Ablaufkante 38 für das zugeordnete Fördermitteltrum unabhängig gleichbleibend vollständige Abdeckungen des zugriffsgefährdeten Zwischenraums 41 verwirklicht werden.

Abschließend ist noch darauf hinzuweisen, daß zwar nicht für das Obertrum 29a des Fördermittels 29, das auf seiner Außenseite mit Fördergut belastet ist, wohl aber für das Untertrum 29b des Fördermittels 29 die Abdeckeinrichtung 2 bzw. 12 bzw. 22 bzw. 32 bzw. 42 bzw. 42a so angeordnet sein kann, daß sie den zugriffsgefährdeten Zwischenraum 41 entweder auf der Außenseite oder aber der Innenseite oder aber gegebenenfalls auch beiden Seiten übergreifend sichert, während für das Obertrum 29a des Fördermittels 29 nur eine Sicherung auf dessen Unterseite infrage kommen kann. Für Ausführungsformen der Erfindung, bei denen zwecks Vermeidung von Rechts- und Linksausführungen einzelner Bauteile, wie beispielsweise abdeckgliedhalternden Tragstücken einer Walzen- bzw. Rollenlagerungseinrichtung, vermeidende Ausführungen dieser Bauelemente beabsichtigt sind, kann daher praktisch nur eine solche Ausgestaltung derselben infrage kommen, bei der sowohl für Ober- als auch für Untertrum 29a bzw. 29b des Fördermittels 29 das zugeordnete Abdeckglied dieses untergreifend, d. h. auf dessen Innenseite gelegen, angeordnet ist.

## Bezugszeichen-Liste

1 = Bandförderer  
2 = Abdeckeinrichtung  
3 = Tragrahmen  
4 = Seitensteg eines Längsholms  
4a = Außenebene des Seitensteges  
5 = Längsholm des Tragrahmens  
6 = Langloch  
7 = Massivprofil  
8 = Hohlprofil  
9 = Steckloch  
10 = Steckbuchse  
11 = Tragstange  
11a = Steckzapfen  
12 = lösbares Abdeckglied  
12a = fahnenartige Verlängerung des Abdeckgliedes im Seitenbereich  
12b = fahnenartige Verlängerung des Abdeckgliedes im Mittelbereich  
12c = abgekröpftes Ende des Abdeckgliedes  
12d = abgekröpftes Ende des Abdeckgliedes  
13 = Tragstück einer Lagerungseinrichtung  
14 = Führungsleisten des Tragstückes  
15 = Festlegungsschlitz  
16 = Achsaufnahmeloch  
17 = Nase  
18 = Gewindeloch  
19 = Stützwinkel  
20 = Umlenkwalze für Fördermittel

21 = Achse oder Welle der Umlenkwalze
22 = angeformtes Abdeckglied
22a = obertrumseitiges Abdeckglied
22b = untertrumseitiges Abdeckglied
23 = Tragstück einer Lagerungseinrichtung
24 = Führungsleisten des Tragstückes
25 = Quertraverse
26 = Achsaufnahmeschlitz
27 = Seitennase
28 = Gewindeloch
29 = Fördermittel
29a = Obertrum des Fördermittels
29b = Untertrum des Fördermittels
30 = Decksteg des Abdeckwinkels
30a = Verlängerungszunge des Abdeckwinkels
31 = Seitensteg des Abdeckwinkels
32 = Abdeckwinkel
33 = Außenstück eines Knickbeschlages
34 = Führungsleisten des Außenstückes
35 = Festlegungsschlitz
36 = Kreisbogen-Schlitzloch
37 = Schwenkachsloch des Knickbeschlages
38 = Ablauf- bzw. Stirnkante des Tragrahmens
39 = Abstand für Bewegungsspiel
40 = Zwischenraum zwischen Längsholmen od. dgl.
41 = zugriffsgefährdeter Zwischenraum
42 = lösbares Abdeckglied
42a = Seitenverlängerung des Abdeckgliedes
43 = Innenstück eines Knickbeschlages
44 = Führungsleisten des Innenstückes
45 = Festlegungsschlitz
46 = Abkröpfung des Innenstückes
47 = fördermitteluntergreifende Verlängerung des Abdeckgliedes
53 = Tragstück mit angeformtem ober- und untertrumseitigem Abdeckglied
54 = Mittelsteg des Tragstückes
55 = Langloch
63 = Abdeckhaube für Tragrahmen
64 = Mittelsteg der Abdeckhaube
65 = Langloch

## Patentansprüche

1. Bandförderer mit einer einen zugriffsgefährdeten Zwischenraum zumindest zwischen dem tragrahmennahen Umfangsbereich einer auf vorzugsweise in Längsrichtung gegenüber einem Tragrahmen verstellbaren Tragstücken aufgenommenen Walze oder Rolle für das Fördermittel und den dieser Walze bzw. Rolle zugeordneten Tragstücken überbrückenden Abdeckeinrichtung, dadurch gekennzeichnet, daß die Tragstücke (13, 23, 33, 43) mit von der Tragrahmenseite her nach innen verlaufenden zumindest die Unterseite des Obertrums des Fördermittels (29) untergreifenden, die Abdeckeinrichtung bildenden ohrenförmigen Abdeckgliedern (22, 22a, 22b) versehen sind.

2. Bandförderer nach Anspruch 1, dadurch gekennzeichnet, daß die Tragstücke (13, 23, 33, 43) mit. die Unterseite des Obertrums des Fördermittels (29) untergreifenden und das Untertrum des Fördermittels (29) über- oder untergreifenden ohrenförmigen Abdeckgliedern (22, 22a, 22b) versehen sind.

3. Bandförderer nach einem der vorhergehenden Ansprüche, dadurch gekennzeichnet, daß mindestens eines der Abdeckglieder (22 bzw. 22a bzw. 22b) als Leiteinrichtung für die Zu-oder Abführung des Ober- bzw. Untertrums (29a bzw. 29b) des Fördermittels (29) zu der bzw. den Walze(n) (20) bzw. Rolle(n) ausgebildet ist.

4. Bandförderer nach Anspruch 3, dadurch gekennzeichnet, daß das als Leiteinrichtung ausgebildete Abdeckglied (22 bzw. 22a bzw. 22b) tragrahmenseitig von dem zugeordneten Ober- oder Untertrum (29a bzw. 29b) des Fördermittels (29) dessen fördergurtferner Oberfläche als Auflage dienend angeordnet ist.

5. Bandförderer nach einem der vorhergehenden Ansprüche, dadurch gekennzeichnet, daß die Abdeckeinrichtung (2) zusätzlich mindestens ein Paar von sich von den gegenüberliegenden Längsholmen (5) oder Seitenstegen des Tragrahmens (3) her in Richtung der zur fördergurtseitigen Oberfläche des Ober- und/oder des Untertrums (29a bzw. 29b) des Fördermittels (29) normalen Mittellängsebene (m) des Bandförderers (1) erstreckenden Abdeckgliedern aufweist.

6. Bandförderer nach einem der vorhergehenden Ansprüche, insbesondere mit gegenüber dem Tragrahmen in Längsrichtung desselben stellungsveränderbaren Tragstücken der Lagerungseinrichtung für die Walze(n) bzw. Rolle(n), dadurch gekennzeichnet, daß mindestens eines der Abdeckglieder (22 bzw. 22a bzw. 22b) tragstückfest angeordnet ist.

7. Bandförderer nach Anspruch 6, dadurch gekennzeichnet, daß mindestens eines der Abdeckglieder (22 bzw. 22a bzw. 22b) mit dem zugeordneten Tragstück (13 bzw. 23) einstückig ausgebildet ist.

8. Bandförderer nach einem Ansprüche 1 bis 6, dadurch gekennzeichnet, daß mindestens eines der Abdeckglieder (22a bzw. 22b) am zugeordneten Tragstück (13 bzw. 23) lösbar festgelegt ist.

9. Bandförderer nach Anspruch 8, mit lösbar festgelegtem bzw. festgelegten Abdeckglied(ern), dadurch gekennzeichnet, daß die Abdeckglieder (22a bzw. 22b) auf der Außenseite des zugeordneten Tragstückes (13 bzw. 23) festgelegt ist bzw. sind.

10. Bandförderer nach Anspruch 8, mit lösbar festgelegtem bzw. festgelegten Abdeckglied(ern), dadurch gekennzeichnet, daß die Abdeckglieder (22a bzw. 22b bzw. 32) auf der Innenseite des zugeordneten Tragstücks (13 bzw. 23) festgelegt ist bzw. sind.

11. Bandföderer nach einem der vorhergehenden Ansprüche, mit gleichzeitig vorgesehenen Abdeckgliedern für jeweils das Ober- und das Untertrum des Fördermittels, dadurch gekennzeichnet, daß die Abdeckglieder (22 bzw. 22a, 22b bzw. 32) für Ober- und Untertrum (29a bzw. 29b) des Fordermittels (29) mit gleichem Abstand von der benachbarten Längsrandkante des Tragstückes (13 bzw. 23) vorzugsweise mit dieser fluchtend angeordnet sind.

12. Bandförderer nach einem der vorhergehenden Ansprüche, mit gleichzeitig vorgesehenen Abdeckgliedern für jeweils das Ober- und Untertrum des Fördermittels, dadurch gekennzeichet, daß die Abdeckglieder (22, 22a, 22b) für Ober- und Untertrum (29a bzw. 29b) des Fördermittels (29) mit gleichem Abstand von der jenseits der Walzen- bzw. Rollenachse (21) gelegenen Stirnkante des Längsholms (5) bzw. Seitensteges bzw. Tragstückes (13 bzw. 23) angeordnet sind.

13. Bandförderer nach einem der vorhergehenden Ansprüche, dadurch gekennzeichnet, daß mindestens eines der Abdeckglieder (32) als Mittelstück vorzugsweise aus Blech oder Kunststoff ausgebildet ist, das mit seinem zu einer zur Mittellängsachse (m) des Bandförderers (1) parallelen Ebene (4a) des benachbarten Tragstückes (13 bzw. 23) der Lagerungseinrichtung fur die Walze(n) (20) bzw. Rolle(n) parallelen Schenkel (31) an diesem Tragstück (13 bzw. 23) festgelegt ist.

14. Bandförderer nach Anspruch 13, dadurch gekennzeichnet, daß mindestens eines der als Winkelstück ausgebildeten Abdeckglieder (32) in einer Stellung am benachbarten Tragstück (13 bzw. 23) der Lagerungseinrichtung für die Walze(n) (20) bzw. Rolle(n) festgelegt ist, in der sein anderer Schenkel (30) parallel zur Längsachse des Tragstückes (13 bzw. 23) verläuft.

15. Bandförderer nach einem der vorhergehenden Ansprüche, dadurch gekennzeichnet, daß mindestens eines der Abdeckglieder als U-oder C-Profil vorzugsweise aus Blech oder Kunststoff ausgebildet ist, das mit seinen jeweils zu einer zur Mittellängsebene (m) des Bandförderers (1) parallelen Ebene (z. B. 4a) des benachbarten Tragstückes (13 bzw. 23) der Langerungseinrichtung für die Walze(n) (20) bzw. Rolle(n) parallelen Seitenstegen an diesem Tragstück (13 bzw. 23) festgelegt ist.

16. Bandförderer nach Anspruch 15, dadurch gekennzeichnet, daß mindestens eines der als U- oder C-Profil ausgebildeten Abdeckglieder in einer Stellung an einander gegenüberliegenden Tragstücken (13 bzw. 23) der Lagerungseinrichtung für die Walze(n) (20) bzw. Rolle(n) festgelegt ist, in der sein Mittelsteg parallel zur Längsachse des Tragstückes (13 bzw. 23) verläuft.

17. Bandförderer nach Anspruch 8, mit lösbar festgelegten Abdeckgliedern, dadurch gekennzeichnet, daß das bzw. die Abdeckglieder (z. B. 12) gegenüber dem zugeordneten Tragstück (13 bzw. 23) der Lagerungseinrichtung für die Walze(n) (20) bzw. Rolle(n) schwenkbar und feststellbar an diesem festgelegt ist bzw. sind.

18. Bandförderer nach einem der vorhergehenden Ansprüche, dadurch gekennzeichnet, daß die Abdeckglieder (12) ein abgekröpftes walzen- bzw. rollenfernes Ende (12c bzw. 12d) aufweisen.

19. Bandförderer nach einem der vorhergehenden Ansprüche, dadurch gekennzeichnet, daß die Abdeckglieder (12) ein etwa Z-förmig gegenüber seinem bzw. ihrem walzen- bzw. rollennahen Ende abgewinkeltes walzen- bzw. rollenfernes Ende (12d) aufweisen.

20. Bandförderer nach einem der vorhergehenden Ansprüche, dadurch gekennzeichnet, daß das bzw. die Abdeckglieder (12 bzw. 42 bzw. 42a) jeweils mittels einer tragrahmenfernen und/oder einer tragrahmennahen oder mittels zweier auf der tragrahmenfernen oder der tragrahmennahen Seite oder auf beiden Seiten der Walze(n) (20) bzw. Rolle(n) angordneten bzw. angeordneter Steckverbindung(en) (9, 11a bzw. 10, 11a) aus jeweils einem längsholm- oder seitensteg- bzw. tragstückfesten Steckzapfen und einer abdeckgliedfesten Aufnahmebuchse für diesen oder einem abdeckgliedfesten Steckzapfen (11a) und einer längsholm- oder seitensteg- bzw. tragstückfesten Aufnahmebuchse (9 bzw. 10) für diesen festgelegt ist bzw. sind.

21. Bandförderer nach einem der vorhergehenden Ansprüche, dadurch gekennzeichnet, daß das bzw. die Abdeckglied(er) (z. B. 12) jeweils mittels einer auf der tragrahmenfernen oder auf der tragrahmennahen Seite der Walze(n) (20) bzw. Rollen(n) angeordneten Steckverbindung aus einem längsholm- oder seitensteg- bzw. tragstückfestem Steckzapfen und einer abdeckgliedfesten Aufnahmebuchse für diesen oder einem abdeckgliedfesten Steckzapfen (11a) und einer längsholm- oder seitensteg- bzw. tragstückfesten Aufnahmebuchse (9 bzw. 10) für diesen festgelegt ist bzw. sind.

## EP 0 156 207 B1

22. Bandförderer nach einem der vorhergehenden Ansprüche, dadurch gekennzeichnet, daß das bzw. die Abdeckglied(er) (z. B. 12) jeweils an seinem bzw. ihrem walzen- bzw. rollenfernen Ende für die gleitende Bewegung tragrahmenfest abgestützt (25) ist bzw. sind.

23. Bandförderer nach einem der vorhergehenden Ansprüche, dadurch gekennzeichnet, daß das bzw. die Abdeckglied(er) (z. B. 22a bzw. 22b bzw. 32) mittels einer Schiebeführungseinrichtung (55 bzw. 65) längsholm- oder seitenstegseitig abgestützt ist bzw. sind.

24. Bandförderer nach einem der vorhergehenden Ansprüche, dadurch gekennzeichnet, daß das bzw. die Abdeckglied(er) (z. B. 12) durch Auflage auf einer Quertraverse (25) des Tragrahmens (3) abgestützt ist bzw. sind.

25. Bandförderer nach einem der vorhergehenden Ansprüche, dadurch gekennzeichnet, daß das bzw. die Abdeckglied(er) (z. B. 12) jeweils mit seinem bzw. ihrem walzen- bzw. rollennahen Ende an einer am zugeordneten Längsholm (5) oder Seitensteg des Tragrahmens (3) bzw. Tragstück (13 bzw. 23) der Lagerungseinrichtung für die Walze(n) (20) bzw. Rolle(n) festgelegten Tragstange (11) vorzugsweise zwei paarweise einander gegenüberliegende oder ein einziges den Zwischenraum (4) zwischen diesen einander gegenüberliegenden Längsholmen (5) oder Seitenstegen bzw. Tragstücken (13 bzw. 23) überbrückendes Abdeckglied(er) (z. B. 12) an einer an diesem Längsholm (4) oder Seitensteg bzw. Tragstücken (13 bzw. 23) festgelegten Tragstange (11), befestigt ist bzw. sind.

26. Bandförderer nach einem der vorhergehenden Ansprüche, dadurch gekennzeichnet, daß das bzw. die Abdeckglied(er) (z. B. 12) jeweils an der zugeordneten Tragstange (11) durch Verschweißen, Verkleben, Verschrauben, Verklemmen oder Verstiften festgelegt ist bzw. sind, wobei sein bzw. ihre bezüglich dieser Festlegungsstelle walzen- bzw. rollenferne(r) Anschlußbereich(e) um diese Tragstange (11) herumgebördelt ist bzw. sind.

27. Bandförderer nach einem der vorhergehenden Ansprüche, dadurch gekennzeichnet, daß die Abdeckeinrichtung (2) für Veränderungen der Größe des das Bewegungsspiel für das Ober- und/oder das Untertrum (29a bzw. 29b) des Fördermittels (29) gewährenden Abstandes (39) ausgebildet ist.

28. Bandförderer nach einem der vorhergehenden Ansprüche, dadurch gekennzeichnet, daß die Abdeckeinrichtung (2) mindestens ein in seiner wirksamen Breite in Richtung auf die zur fördergutseitigen Oberfläche des Fördermittels (29) normale Mittellängsebene (m) des Bandförderers (1) einstellbares Abdeckglied (z. B. 22a bzw. 22b) aufweist.

29. Bandförderer nach einem der vorhergehenden Ansprüche, dadurch gekennzeichnet, daß die Abdeckeinrichtung (2) für eine Veränderung der Größe ihres Abstandes zur zugeordneten Walzen- bzw. Rollenanordnung (20) ausgebildet ist.

30. Bandförderer nach einem der vorhergehenden Ansprüche, dadurch gekennzeichnet, daß das bzw. mindestens eines der Abdeckglied(er) (z. B. 22a bzw. 22b) für eine Veränderung seines Abstandes zur zugeordneten Walzen- bzw. Rollenanordnung (20) verschiebbar und in gewünschter Arbeitsstellung festlegbar an dem bzw. den zuggeordneten Längsholm(en) (5) oder Seitensteg(en) des Tragrahmens (3) bzw. an dem bzw. den zugeordneten Tragstück(en) (13 bzw. 23) der Lagerungseinrichtung für die Walze(n) (20) bzw. Rolle(n) gehaltert ist.

## Claims

1. Belt conveyor with a masking device bridging an intermediate space which is hazardous of access at least between the peripheral zone of a drum or roller for the conveyor means and bearer members associated with this drum or roller, said drum or roller being received on said bearer members which are preferably adjustable in the lengthwise direction relative to a support frame, said peripheral zone being close to the support frame, characterised in that the bearer members (13, 23, 33, 43) are provided with ear-like masking limbs (22, 22a, 22b) which constitute the masking device and which engage beneath at least the underside of the upper run of the conveyor means (29) from the support frame side of the conveyor means inwards.

2. Belt conveyor according to claim 1, characterised in that the bearer members (13, 23, 33, 43) are provided with ear-like masking limbs (22, 22a, 22b) which engage below the underside of the upper run of the conveyor means (29) and which engage above or below the lower run of the conveyor means (29).

3. Belt conveyor according to one of the preceding claims, characterised in that at least one of the masking limbs (22 or 22a or 22b) is formed as a guide device for the guidance of the upper or lower runs (29a or 29b) of the conveyor means (29) towards or away from the drum(s) (20) or roller(s).

4. Belt conveyor according to claim 3, characterised in that the masking limb (22 or 22a or 22b) formed as a guide device is arranged on the support frame side of the associated upper or lower run (29a or 29b) of the conveyor means (29) whose upper surface which is remote from the conveyor belt serves as a contact surface.

5. Belt conveyor according to one of the preceding claims, characterised in that the masking device (2) additionally includes at least one pair of masking limbs extending from the opposing longerons (5) or side webs of the support frame (3) in the direction of the central longitudinal plane or planes of the belt conveyor (1) which is/are perpendicular to the conveyor-belt-side surface of the upper and/or of the lower run (29a or 29b) of the conveyor means (29).

6. Belt conveyor according to one of the preceding claims, particularly with bearer members of the support device for the drum(s) or roller(s) which are positionally adjustable in the longitudinal direction relative to the support frame, characterised in that at least one of the masking limbs (22 or 22a or 22b) is arranged to be rigid with the bearer members.

7. Belt conveyor according to claim 6, characterised in that at least one of the masking limbs (22 or 22a or 22b) is made in one piece with the associated bearer member (13 or 23).

8. Belt conveyor according to one of claims 1 to 6, characterised in that at least one of the masking limbs (22a or 22b) is detachably secured to the associated bearer member (13 or 23).

9. Belt conveyor according to claim 8, with detachably secured or fixedly secured masking limb or limbs, characterised in that the masking limb or limbs (22a or 22b) is or are secured to the outer side of the associated bearer member (13 or 23).

10. Belt conveyor according to claim 8, with detachably secured or fixedly secured masking limb or limbs, characterised in that the masking limb or limbs (22a or 22b or 32) is or are secured to the inner side of the associated bearer member (13 or 23).

11. Belt conveyor according to one of the preceding claims, including masking limbs provided simultaneously for each of the upper and lower runs of the conveyor means, characterised in that the masking limbs (22 or 22a, 22b or 32) for the upper and lower runs (29a or 29b) of the conveyor means (29) are arranged with equal spacing from the adjacent longitudinal margin of the bearer member (13 or 23), preferably in alignment with this.

12. Belt conveyor according to one of the preceding claims, with masking limbs simultaneously provided for both the upper and lower runs of the conveyor means, characterised in that the masking limbs (22, 22a, 22b) for upper and lower runs (29a or 29b) of the conveyor means (29) are arranged with equal spacing from the front edge of the longeron (5) or side web or bearer member (13 or 23) which lies on the other side of the drum or roller shaft (21).

13. Belt conveyor according to one of the preceding claims, characterised in that at least one of the masking limbs (32) is formed as a centrepiece, preferably of sheet metal or plastics material, which is secured to the bearer member (13 or 23) with its leg (31) parallel to a plane (4a) of the adjacent bearer member (13 or 23) of the support device for the drum(s) (20) or roller(s), said plane being parallel to the central longitudinal axis or axes of the belt conveyor (1).

14. Belt conveyor according to claim 13, characterised in that at least one of the masking limbs (32), formed as an angled piece, is secured in a position on the associated bearer member (13 or 23) of the support device for the drum(s) (20) or roller(s) in which its other leg (30) extends parallel to the longitudinal axis of the bearer member (13 or 23).

15. Belt conveyor according to one of the preceding claims, characterised in that at least one of the masking limbs is formed as a U-shaped or C-shaped element, preferably of sheet metal or plastics material, which is secured to the bearer member (13 or 23) with its side webs parallel to a plane (eg 4a) of the adjacent bearer member (13 or 23) of the support device for the drum(s) (20) or roller(s), said plane being parallel to the central longitudinal plane or planes of the belt conveyor (1).

16. Belt conveyor according to claim 15, characterised in that at least one of the U-shaped or C-shaped masking limbs is secured in a position on oppositely facing bearer members (13 or 23) of the support device for the drum(s) (20) or roller(s) in which its central web extends parallel to the longitudinal axis of the bearer member (13 or 23).

17. Belt conveyor according to claim 8, with detachably secured masking limbs, characterised in that the masking limb or limbs (eg 12) is or are pivotable relative to the associated bearer member (13 or 23) of the support device for the drum(s) (20) or roller(s), or is or are adjustably mounted thereon.

18. Belt conveyor according to one of the preceding claims, characterised in that the masking limbs (12) have an angled offset end (12c or 12d) remote from the drum or roller.

19. Belt conveyor according to one of the preceding claims, characterised in that the masking limbs (12) have an approximately Z-shaped end (12d) remote from the drum or roller and which is at an angle to its or their end or ends adjacent to the drum or roller.

20. Belt conveyor according to one of the preceding claims, characterised in that the masking limb or limbs (12 or 42 or 42a) is or are each secured by means of plug-in connection means (9, 11a or 10, 11a), said connection means comprising a connector remote from the support frame and/or a connector adjacent to the support frame, or comprising two connectors arranged on the side of the drum(s) (20) or roller(s) remote from the support frame or adjacent to the support frame or on both sides of the drum(s) (20) or roller(s), each said connector comprising a plug-in pin fixed to a longeron or side web or bearer member and a receiving socket for the pin fixed to a masking limb, or comprising a plug-in pin (11a) fixed to a masking limb and a receiving socket (9 or 10) for the pin fixed to a longeron or side web or bearer member.

21. Belt conveyor according to one of the preceding claims, characterised in that the or each of the masking limbs (eg 12) is secured by means of a plug-in connection arranged on the side of the drum(s) (20) or roller(s) remote from or adjacent to the support frame, the or each said connection comprising a plug-in pin fixed to a longeron or side web or bearer member and a receiving socket for the pin fixed to a masking limb, or alternatively comprising a plug-in pin (11a) fixed to a masking limb and a receiving socket (9 or 10) for the pin fixed to a longeron or side web or bearer member.

EP 0 156 207 B1

22. Belt conveyor according to one of the preceding claims, characterised in that the or each of the masking limbs (eg 12) is supported rigid with the support frame at its end remote from the drum or roller for the sliding movement.

23. Belt conveyor according to one of the preceding claims, characterised in that the or each of the masking limbs (eg 22a or 22b or 32) is supported on the longeron side or side web side by means of a displaceable guide device (55 or 65).

24. Belt conveyor according to one of the preceding claims, characterised in that the or each masking limb (eg 12) is supported by contact on a cross-piece (25) of the support frame (3).

25. Belt conveyor according to one of the preceding claims, characterised in that the or each masking limb (eg 12) has its end adjacent to the drum or roller secured to a bearer rod (11) mounted on the associated longeron (5) or side web of the support frame (3) or bearer member (13 or 23) of the support device for the drum(s) (20) or roller(s), preferably with two masking limbs (eg 12) arranged in pairs opposite each other or with one masking limb bridging the intermediate space (4) between these opposed longerons (5) or side webs or bearer members (13 or 23), with the masking limbs being on a bearer rod (11) secured to this longeron (4) or side web or bearer member (13 or 23).

26. Belt conveyor according to one of the preceding claims, characterised in that the or each masking limb (eg 12) is secured to the associated bearer rod (11) by welding, adhesive, screws, clamps or pins, and wherein its or their connecting zone or zones remote from the drum or roller with reference to this fastening position borders around this bearer rod (11).

27. Belt conveyor according to one of the preceding claims, characterised in that the masking device (2) is formed so as to permit changes in the magnitude of the spacing (39) which provides the movement play for the upper and/or the lower run (29a or 29b) of the conveyor means (29).

28. Belt conveyor according to one of the preceding claims, characterised in that the masking device (2) comprises at least one masking limb (eg 22a or 22b) which is adjustable in terms of its effective width in the direction of the central longitudinal plane or planes of the belt conveyor (1) perpendicular to the conveyor-belt-side surface of the conveyor means (29).

29. Belt conveyor according to one of the preceding claims, characterised in that the masking device (2) is formed so as to enable the size of the space between the masking device and the associated drum or roller arrangement (20) to be varied.

30. Belt conveyor according to one of the preceding claims, characterised in that the or at least one of the masking limbs (eg 22a or 22b) is displaceable for changing its spacing relative to the associated drum or roller arrangement (20), and is securable in a desired working position on the associated longeron or longerons (5) or side web or webs of the support frame (3), or is held on the associated bearer member or members (13 or 23) of the support device for the drum(s) (20) or roller(s).

**Revendications**

1. Convoyeur à bande, comportant un dispositif de recouvrement comblant l'espace intercalaire, dans lequel existe un risque d'accès et qui est situé au moins entre la zone périphérique, proche d'un cadre de support, d'un cylindre ou rouleau, monté sur des éléments de support déplaçables de préférence dans la direction longitudinale par rapport au cadre de support et prévu pour le moyen d'entraînement, et les éléments de support associés à ce cylindre ou rouleau, caractérisé en ce que les éléments de support (13, 23, 33, 43) sont pourvus d'éléments de recouvrement (22 ,22a, 22b) en forme d'oreilles, qui s'étendent vers l'intérieur à partir du côté du cadre de support, s'engagent au-dessous de la face inférieure du brin supérieur du moyen d'entraînement (29) et forment le dispositif de recouvrement.

2. Convoyeur à bande selon la revendication 1, caractérisé en ce que les éléments de support (13, 23, 33, 43) sont équipés d'éléments de recouvrement (22, 22a, 22b) en forme d'oreilles, qui s'engagent au-dessous de la face inférieure du brin supérieur du moyen d'entraînement (29) et s'engagent au-dessus ou au-dessous du brin inférieur du moyen d'entraînement (29).

3. Convoyeur à bande selon l'une des revendications précédentes, caractérisé en ce qu'au moins l'un des éléments de recouvrement (22 ou 22a ou 22b) est réalisé sous la forme d'un dispositif de guidage pour l'amenée ou l'évacuation du brin supérieur ou du brin inférieur (29a ou 29b) du moyen d'entraînement (29) en direction ou à partir du ou des cylindre(s) (20) ou rouleau(x).

4. Convoyeur à bande selon la revendication 3, caractérisé en ce que l'élément de recouvrement (22 ou 22a ou 22b) réalisé sous la forme d'un dispositif de guidage est disposé, du côté du cadre de support tourné vers le brin supérieur ou le brin inférieur associé (29a ou 29b) du moyen d'entraînement (29), pour servir de support à la surface de ce brin, tournée à l'opposé de la substance à transporter.

5. Convoyeur à bande selon l'une des revendications précédentes, caractérisé en ce que le dispositif de recouvrement (2) comporte en outre au moins un couple d'éléments de recouvrement, qui s'étendent à partir des longerons (5) ou barres latérales, situées à l'opposé l'une de l'autre, du cadre de support (3) en direction du plan longitudinal médian (m) du convoyeur à bande (1), qui est perpendiculaire à la surface, tournée vers la substance à transporter, du brin supérieur (1) ou du brin inférieur (29a ou 29b) du moyen d'entraînement (29).

6. Convoyeur à bande selon l'une des revendications précédentes, notamment comportant des

16

éléments de support, dont la position est modifiable par rapport au cadre de support, dans la direction longitudinale de ce dernier, du dispositif de tourillonnage pour le ou les cylindre(s) ou rouleau(x), caractérisé en ce qu'au moins l'un des éléments de recouvrement (22 ou 22a ou 22b) est monté fixe par rapport à un élément de support.

7. Convoyeur à bande selon la revendication 6, caractérisé en ce qu'au moins l'un des éléments de recouvrement (22 ou 22a ou 22b) est réalisé d'un seul tenant avec l'élément de support associé (13 ou 23).

8. Convoyeur à bande selon l'une des revendications 1 à 6, caractérisé en ce qu'au moins l'un des éléments de recouvrement (22a ou 22b) est fixé, de façon amovible, sur l'élément de support associé (13 ou 23).

9. Convoyeur à bande selon la revendication 8, comportant un ou des éléments de recouvrement fixés de façon amovible, caractérisé en ce que les éléments de recouvrement (22a ou 22b) sont fixés sur la face extérieure de l'élément de support associé (13 ou 23).

10. Convoyeur à bande selon la revendication 8, comportant un ou des éléments de recouvrement fixés de façon amovible, caractérisé en ce que les éléments de recouvrement (22a ou 22b ou 32) sont fixés sur la face intérieure de l'élément de support associé (13 ou 23).

11. Convoyeur à bande selon l'une des revendications précédentes, comprenant des éléments de recouvrement prévus simultanément respectivement pour le brin supérieur et le brin inférieur du moyen d'entraînement, caractérisé en ce que les éléments de recouvrement (22 ou 22a, 22b ou 32) pour le brin supérieur ou le brin inférieur (29a ou 29b) du moyen d'entraînement (29) sont disposés à une même distance de l'arête marginale longitudinale, voisine, de l'élément de support (13 ou 23), de préférence dans une position alignée avec cette arête.

12. Convoyeur à bande selon l'une des revendications précédentes, comportant des éléments de recouvrement prévus simultanément respectivement pour le brin supérieur et le brin inférieur du moyen d'entraînement, caractérisé en ce que les éléments de recouvrement (22, 22a, 22b) pour le brin supérieur et le brin inférieur (29a ou 29b) du moyen convoyeur (29) sont situés à une même distance de l'arête frontale, située de l'autre côté de l'axe (21) du cylindre ou du rouleau, du longeron (5) ou de la barre · latérale ou de l'élément de support (13 ou 23).

13. Convoyeur à bande selon l'une des revendications précédentes, caractérisé en ce qu'au moins l'un des éléments de recouvrement (32) est réalisé sous la forme d'un élément médian, de préférence en tôle ou en matière plastique, qui est fixé par sa branche (31), qui est parallèle à un plan (4a), parallèle à l'axe médian longitudinal (m) du convoyeur à bande (1), de l'élément de support voisin (13 ou 23) du dispositif de tourillonnage pour le(s) cylindre(s) (20) ou rouleau(x), sur cet élément de support (13 ou 23).

14. Convoyeur à bande selon la revendication 13, caractérisé en ce qu'au moins l'un des éléments de recouvrement (32), réalisé sous la forme d'une pièce coudée, est fixé sur l'élément de support voisin (13 ou 23) du dispositif de tourillonnage pour le(s) cylindre(s) (20) ou rouleau(x), dans une position, dans laquelle son autre branche (30) est parallèle à l'axe longitudinal de l'élément de support (13 ou 23).

15. Convoyeur à bande selon l'une des revendications précédentes, caractérisé en ce qu'au moins l'un des éléments de recouvrement est réalisé sous la forme d'un profilé en U ou en C, constitué de préférence par une tôle ou une matière plastique, qui est fixée, par ses barres latérales respectives parallèles à un plan (par exemple 4a), parallèle à l'axe médian longitudinal (m) du convoyeur à bande (1), de l'élément de support voisin (13 ou 23) du dispositif de tourillonnage pour le(s) cylindre(s) (20) ou rouleau(x), sur cet élément de support (13 ou 23).

16. Convoyeur à bande selon la revendication 15, caractérisé en ce qu'au moins l'un des éléments de recouvrement réalisé sous la forme d'un profilé en U ou en C est fixé sur des éléments de support (13 ou 23), situés dans des positions opposées, du dispositif de tourillonnage pour le(s) cylindre(s) (20) ou rouleau(x), dans une position, dans laquelle sa branche médiane est parallèle à l'axe longitudinal de l'élément de support (13 ou 23).

17. Convoyeur à bande selon la revendication 8, comportant des éléments de recouvrement fixés de façon amovible, caractérisé en ce que le ou les éléments de recouvrement (par exemple 12) est ou sont fixés de manière à pouvoir pivoter et de manière à pouvoir y être fixés, par rapport à l'élément de support associé (13 ou 23) du dispositif de tourillonnage pour le(s) cylindre(s) (20) ou rouleau(x).

18. Convoyeur à bande selon l'une des revendications précédentes, caractérisé en ce que les éléments de recouvrement (12) possèdent une extrémité coudée (12c ou 12d) éloignée du cylindre ou du rouleau.

19. Convoyeur à bande selon l'une des revendications précédentes, caractérisé en ce que les éléments de recouvrement (12) possèdent une extrémité (12d), éloignée du cylindre ou du rouleau, qui est coudée avec une forme en Z par rapport à la ou aux extrémités proches des cylindres ou des rouleaux.

20. Convoyeur à bande selon l'une des revendications précédentes, caractérisé en ce que le ou les éléments de recouvrement (12 ou 42 ou 42a) est ou sont fixés, respectivement au moyen d'un système de liaison à enfichage (9, 11a ou 10, 11a) éloigné du cadre de support et/ou proche du cadre de support ou bien à l'aide de deux systèmes de liaison à enfichage (9, 11a ou 10, 11a) disposés sur le côté éloigné du cadre de support ou sur le côté proche du cadre de support ou des deux côtés du ou des cylindre(s) (20) ou rouleau(x), et constitués respectivement par un téton enfichable solidaire du longeron ou de la barre latérale ou de la pièce de support et par une douille fixée sur l'élément de recouvrement et destinée à recevoir ce téton, ou par un téton enfichable (11a) fixé sur l'élément de recouvrement et une douille réceptrice (9 ou 10) fixée sur le longeron ou sur la barre latérale ou sur l'élément de support et servant à loger ce téton.

21. Convoyeur à bande suivant l'une des revendications précédentes, caractérisé en ce que le ou les éléments de recouvrement (par exemple 12) est ou sont fixés respectivement au moyen d'un système de liaison à enfichage disposé sur le côté du ou des cylindres (20) ou rouleaux, éloigné ou proche du cadre de support, et constitué par un téton enfichable solidaire du longeron ou de la barrette latérale ou de l'élément de support, et par une douille réceptrice fixée sur l'élément de recouvrement et destinée à recevoir ce téton, ou par un téton enfichable (11a) fixé à l'élément de recouvrement et par une douille réceptrice (9 ou 10) fixée sur le longeron ou la barre latérale ou l'élément de support et destinée à loger ce téton.

22. Convoyeur à bande selon l'une des revendications précédentes, caractérisé en ce que le ou les éléments de recouvrement (par exemple 12) est ou sont soutenus (25), d'une manière fixe par rapport au cadre de support, au niveau de son extrémité ou de leurs extrémités, éloignées des cylindres ou des rouleaux, pour le mouvement de glissement.

23. Convoyeur à bande selon l'une des revendications précédentes, caractérisé en ce que le ou les éléments de recouvrement (voir par exemple 22a ou 22b ou 32) est ou sont soutenus, au niveau des longerons et au niveau des barrettes latérales, à l'aide d'un dispositif de guidage coulissant (55 ou 65).

24. Convoyeur à bande selon l'une des revendications précédentes, caractérisé en ce que le ou les éléments de recouvrement (par exemple 12) est ou sont soutenus en appui sur une traverse (25) du cadre de support (3).

25. Convoyeur à bande selon l'une des revendications précédentes, caractérisé en ce que le ou les éléments de recouvrement (par exemple 12) est ou sont fixés, respectivement par sa ou leur extrémité proche des cylindres ou des rouleaux, sur une barre de support (11) fixée sur le longeron (5) ou la barre latérale, associée, du cadre de support (3) ou de l'élément de support (13 ou 23) du dispositif de tourillonnage prévu pour le(s) cylindre(s) (20) ou rouleau(x), et de préférence deux éléments de recouvrement (par exemple 12), disposés en vis-à-vis l'un de l'autre de manière à former un couple, ou bien un seul élément de recouvrement (par exemple 12) comblant l'espace intercalaire (4) présent entre ces longerons (5) ou barres latérales ou éléments de support (13 ou 23), disposés réciproquement en vis-à-vis, est ou sont fixés sur une barre de support (11) fixée sur ce longeron (4) ou sur cette barre latérale ou sur des éléments de support (13 ou 23).

26. Convoyeur à bande selon l'une des revendications précédentes, caractérisé en ce que le ou les éléments de recouvrement (par exemple 12) est ou sont fixés respectivement sur la barre de support associée (11) par soudage, collage, vissage, coincement ou goupillage, auquel cas sa ou ses zones de raccordement éloignées du cylindre ou du rouleau par rapport à ce point de fixation, comportent un rebord entourant cette barre de support (11).

27. Convoyeur à bande selon l'une des revendications précédentes, caractérisé en ce que le dispositif de recouvrement (2) est réalisé de manière à permettre des modifications de la valeur de la distance (39) garantissant le jeu de déplacement pour le brin supérieur et/ou le brin inférieur (29a ou 29b) du moyen d'entraînement (29).

28. Convoyeur à bande selon l'une des revendications précédentes, caractérisé en ce que le dispositif de recouvrement (2) possède au moins un élément de recouvrement (par exemple 22a ou 22b), dont la largeur active est réglable dans la direction du plan médian longitudinal (m) du convoyeur à bande (1), qui est perpendiculaire à la surface, située du côté de la substance à entraîner, du moyen d'entraînement (29).

29. Convoyeur à bande selon l'une des revendications précédentes, caractérisé en ce que le dispositif de recouvrement (2) est agencé de manière à permettre une modification de la valeur de sa distance par rapport au dispositif à cylindres ou rouleaux (20) associé.

30. Convoyeur à bande selon l'une des revendications précédentes, caractérisé en ce que le ou au moins l'un des éléments de recouvrement (par exemple 22a ou 22b) est maintenu de manière à être déplaçable en vue d'une modification de sa distance par rapport au dispositif à cylindres ou rouleaux (20) associé et de manière à pouvoir être fixé dans une position désirée de travail, sur le ou les longeron(s) associé(s) (5) ou barre(s) latérale(s) du cadre de support (3) ou sur le ou les élément(s) de support associé(s) (13 ou 23) du dispositif de tourillonnage pour le(s) cylindre(s) (20) ou rouleau(x).

_Fig.1_

_Fig.5_

_Fig.6_

EP 0 156 207 B1

_Fig.4_

_Fig.2_

_Fig.3_

2